# EUROPEAN PATENT SPECIFICATION

(11) **EP 4 271 033 B1**
(45) Date of publication and mention of the grant of the patent: **21.10.2026**
(21) Application number: 21918281.3
(22) Date of filing: 13.01.2021
(51) Int. Cl.: H04L 5/00, H04W 56/00, H04L 27/26, H04L 1/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 01.11.2023
(73) Proprietor: Huawei Technologies Co., Ltd., Shenzhen, Guangdong 518129 (CN)
(72) Inventor: HAN, Jing, Shenzhen, Guangdong 518129 (CN); ZHANG, Li, Shenzhen, Guangdong 518129 (CN); SHEN, Zhongyi, Shenzhen, Guangdong 518129 (CN); LI, Hong, Shenzhen, Guangdong 518129 (CN)
(74) Representative: Gill Jennings & Every LLP
(86) International application number: PCT/CN2021/071540
(87) International publication number: WO 2022/151066

(56) References cited:
- CN-A- 110 536 387
- CN-A- 111 867 017
- CN-A- 111 934 837
- US-A1- 2019 305 918
- ZTE: "Discussion on Supporting Efficient Activation/De-activation Mechanism for SCells in NR CA", vol. RAN WG1, no. e-Meeting; 20200817 - 20200828, 8 August 2020 (2020-08-08), XP051917467, Retrieved from the Internet <URL:https://ftp.3gpp.org/tsg_ran/WG1_RL1/TSGR1_102-e/Docs/R1-2005442.zip R1-2005442 Discussion on Supporting Efficient Activation De-activation Mechanism for SCells in NR CA.docx> [retrieved on 20200808]
- LG ELECTRONICS INC: "Potential solutions for fast SCell activation", vol. RAN WG2, no. Prague, Czech; 20190826 - 20190830, 16 August 2019 (2019-08-16), XP051768768, Retrieved from the Internet <URL:http://www.3gpp.org/ftp/tsg_ran/WG2_RL2/TSGR2_107/Docs/R2-1911006.zip> [retrieved on 20190816]

## Description

### TECHNICAL FIELD

This application relates to the field of mobile communication technologies, and in particular, to a communication method and apparatus.

### BACKGROUND

With diversified development of services such as a mobile internet service and an internet of things service, mobile communication has an increasingly high requirement on massive data uploading. For example, services such as an ultra-high definition video service, an intelligent surveillance service, and a virtual reality (virtual reality, VR) video live broadcast service have a high requirement on an uplink (uplink, UL) capacity. An existing uplink enhancement solution includes implementing cooperative transmission of a plurality of frequencies by using technologies such as carrier aggregation (carrier aggregation, CA), and this can improve spectrum resource utilization or uplink coverage to some extent.

In a CA scenario, user equipment (user equipment, UE) may aggregate a plurality of carriers, and the carriers participating in aggregation include a primary carrier (primary carrier, PCC) that is also referred to as a primary cell (primary cell, PCell), and one or more secondary carriers (secondary carriers, SCCs) that are also referred to as secondary cells (secondary cells, SCells). If a network device needs to configure the UE to work on a specific secondary carrier, the network device needs to indicate the UE to activate the secondary carrier In a process of activating the secondary carrier, the UE needs to receive a synchronization signal block (synchronization signal block, SSB) from the network device, to adjust automatic gain control (automatic gain control, AGC) based on the SSB, synchronize with the to-be-activated secondary carrier based on the SSB, and so on.

However, the SSB is periodically sent, and a sending cycle of the SSB is usually large, usually greater than or equal to 20 milliseconds (ms). Consequently, an activation delay of the secondary carrier is also high, and this problem cannot be resolved currently.

ZTE meeting transcript XP051917467 ("Discussion on Supporting Efficient Activation/De-activation Mechanism for SCells in NR CA", 3GPP DRAFT, R1-2005442, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, vol. RAN WG1, no. e-Meeting; 20200817 - 20200828 8 August 2020 (2020-08-08), XP051917467, Retrieved from the Internet: URL:https://ftp.3gpp.org/tsg_ran/WG1_RL1/fSGR1_102-e/Docs/R1-2005442.zip R1-2005442 Discussion on Supporting Efficient Activation De-activation Mechanism for SCells in NR CA.docx [retrieved on 2020-08-08]) discusses temporary reference signals (RS) as a means for providing an efficient activation/de-activation mechanism for SCells in relation to Rel-16,

LG Electronics meeting transcript XP051768768 (LG ELECTRONICS INC: "Potential solutions for fast SCell activation", 3GPP DRAFT; R2-1911006_POTENTIAL SOLUTIONS FOR FAST SCELL ACTIVATION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; vol. RAN WG2, no. Prague, Czech; 20190826 - 20190830 16 August 2019 (2019-08-16), XP051768768, Retrieved from the Internet: URL:http://www.3gpp.org/ftp/tsg_ran/WG2_RL2/TSGR2_107/Docs/R2-1911006.zip [retrieved on 2019-08-16]) discusses temporary RS resources and dormancy behaviour as a solution for fast SCell activation.

Chinese patent application CN 110536387 A (ZTE CORPORATION, 3 December 2019) discloses a data transmission method and device and a computer readable storage medium in the subject area of discontinuous reception.

### SUMMARY

Embodiments of this application provide a communication method and apparatus, to reduce an activation delay of a secondary carrier The invention is defined in the appended claims.

According to a first aspect, a first communication method is provided. The method may be performed by a terminal device, or may be performed by a circuit system, where the circuit system can implement a function of the terminal device, or may be performed by a large device including the terminal device. The method includes: receiving an activation command from a network device, where the activation command indicates to activate a first secondary carrier, and the first secondary carrier is one of secondary carriers of the terminal device; when the first secondary carrier is known, determining, based on a measurement cycle of the terminal device for the first secondary carrier, whether to adjust AGC of the first secondary carrier, where a temporary reference signal is used to adjust the AGC of the first secondary carrier; receiving a first temporary reference signal from the first secondary carrier; and performing time-frequency synchronization with the first secondary carrier based on the first temporary reference signal.

In this embodiment of this application, the temporary reference signal may be used to assist in activation of the secondary carrier, to reduce dependency of a process of activating the secondary carrier on an SSB. In this case, the process of activating the secondary carrier does not need to depend on a sending cycle of the SSB, so that the process of activating the secondary carrier is accelerated, and a delay of the process of activating the secondary carrier is reduced. In addition, in this embodiment of this application, a manner of activating the secondary carrier based on the temporary reference signal is set. To be specific, both the network device and the terminal device can determine a case in which the temporary reference signal needs to be used and how to use the temporary reference signal. This standardizes behavior of the network device and the terminal device, and achieves common cognition of the terminal device and the network device.

In this embodiment, the determining, based on a measurement cycle of the terminal device for the first secondary carrier, whether to adjust AGC of the first secondary carrier includes: skipping adjusting the AGC of the first secondary carrier when the measurement cycle of the terminal device for the first secondary carrier is less than or equal to a first measurement cycle. If the measurement cycle of the terminal device for the first secondary carrier is less than or equal to the first measurement cycle, it indicates that the measurement cycle on the secondary carrier is small, and previously determined AGC may continue to be used this time. Therefore, in this case, the AGC of the first secondary carrier may not be adjusted, to reduce power consumption of the terminal device, and simplify the process of activating the secondary carrier The first measurement cycle is, for example, 160 ms, or may be another value.

In an optional implementation, activation duration of the first secondary carrier is obtained based on first duration, and the first duration is duration in which the terminal device waits for and obtains a first complete temporary reference signal burst from the first secondary carrier In this embodiment of this application, the secondary carrier is activated by using the temporary reference signal. Therefore, the activation duration of the first secondary carrier may be obtained based on information related to the temporary reference signal, and does not need to depend on the sending cycle of the SSB. The temporary reference signal is, for example, an aperiodic signal, or may be a periodic signal. For example, a sending cycle of the temporary reference signal is less than the sending cycle of the SSB, so that an activation delay of the secondary carrier can be lowered.

In an optional implementation, the activation duration of the first secondary carrier meets the following relationship: *T_{activation_time}* = *T_{first_TempRS} +* 5. *T_{activation_time}* represents the activation duration of the first secondary carrier, and *T_{first_TempRS}* represents the first duration. This is merely an example of a relationship that the activation duration of the first secondary carrier needs to meet.

In an optional implementation, the determining, based on a measurement cycle of the terminal device for the first secondary carrier, whether to adjust AGC of the first secondary carrier includes: receiving a second temporary reference signal from the first secondary carrier when the measurement cycle of the terminal device for the first secondary carrier is greater than a first measurement cycle; and adjusting the AGC of the first secondary carrier based on the second temporary reference signal. If the measurement cycle of the terminal device for the first secondary carrier is greater than the first measurement cycle, it indicates that the measurement cycle on the secondary carrier is large. If previously determined AGC continues to be used this time, the AGC may be not accurate enough. Therefore, in this case, the AGC of the first secondary carrier may be adjusted. If the SSB is used to adjust the AGC, and the SSB is periodically sent, time required for adjusting the AGC is related to the sending cycle of the SSB or an SSB measurement timing configuration information (SSB measurement timing configuration, SMTC) cycle. However, the sending cycle of the SSB is usually large, and is usually greater than or equal to 20 ms. Consequently, an activation delay of the secondary carrier is also high. Therefore, in this embodiment of this application, the AGC may be adjusted by using the temporary reference signal, so that the activation delay of the secondary carrier can be lowered.

In an optional implementation, when a carrier aggregation manner of the terminal device is intra-band carrier aggregation, activation duration of the first secondary carrier is obtained based on second duration, and the second duration is duration in which the terminal device waits for and obtains a first complete temporary reference signal burst from the first secondary carrier, or the second duration is a larger value in third duration and fourth duration, where the third duration is duration in which the terminal device waits for and obtains a first complete temporary reference signal burst from the first secondary carrier, the fourth duration is duration in which the terminal device waits for and obtains a first complete reference signal burst from a second carrier, and the second carrier includes an activated carrier of the terminal device. For example, it is specified that sending time of the temporary reference signal on the first secondary carrier is aligned with sending time of a reference signal on the activated carrier in aggregated carriers of the UE. In this case, the second duration may be the larger value in the third duration and the fourth duration, so that the technical solution in this embodiment of this application can be better compatible with an existing protocol. Alternatively, due to hysteresis of an AGC adjustment process, actually, it is not necessarily required that sending time of the temporary reference signal on the first secondary carrier be aligned with sending time of a reference signal on the activated carrier in aggregated carriers of the terminal device. Even if the sending time is not aligned, the terminal device can adjust the AGC. Therefore, it may not be specified that the sending time of the temporary reference signal on the first secondary carrier is aligned with the sending time of the reference signal on the activated carrier in the aggregated carriers of the terminal device. In this case, the second duration may be the duration in which the terminal device waits for and obtains the first complete temporary reference signal burst from the first secondary carrier In this manner, a limitation on the network device is reduced without increasing calculation complexity of the terminal device, and implementation flexibility of the network device is improved.

In an optional implementation, when the second duration is the duration in which the terminal device waits for and obtains the first complete temporary reference signal burst from the first secondary carrier, the activation duration of the first secondary carrier meets the following relationship: *T_{activation_time}* = *T_{first_TempRS} + T_{TempRS}* + 5. *T_{activation_time}* represents the activation duration of the first secondary carrier, *T_{first_TempRS}* represents the second duration, and *T_{TempRS}* represents duration in which the terminal device waits for and obtains one complete temporary reference signal burst from the first secondary carrier This is merely an example of a relationship that the activation duration of the first secondary carrier needs to meet.

In an optional implementation, when the second duration is the larger value in the third duration and the fourth duration, the activation duration of the first secondary carrier meets the following relationship: *T_{activation_time}* = max{*T_{first_{TempRS}},T_{first_RS}*} *+ T_{TempRS}* + 5. *T_{activation_time}* represents the activation duration of the first secondary carrier, *T_{first_TempRS}* represents the third duration, *T_{first_RS}* represents the fourth duration, max {x, y} represents taking a larger value in x and y, and *T_{TempRS}* represents duration in which the terminal device waits for and obtains one complete temporary reference signal burst from the first secondary carrier. This is merely an example of the relationship that the activation duration of the first secondary carrier needs to meet.

In an optional implementation, a reference signal from the second carrier includes one or more of the following: an SSB, a CSI-RS, or a temporary reference signal. The reference signal on the activated carrier of the terminal device is not limited in this embodiment of this application.

In an optional implementation, the method further includes: sending capability information to the network device, where the capability information indicates that AGC adjustment is related to a carrier other than the first secondary carrier, or the capability information indicates that AGC adjustment is irrelevant to a carrier other than the first secondary carrier. In this manner, the AGC adjustment process of the UE can better comply with a capability of the UE.

In an optional implementation, the first secondary carrier belongs to a first frequency range. For example, the first frequency range is a low frequency range, for example, a frequency range (frequency range, FR) 1, or may be another frequency range.

According to a second aspect, a second communication method is provided. The method may be performed by a terminal device, or may be performed by a circuit system, where the circuit system can implement a function of the terminal device, or may be performed by a large device including the terminal device. The method includes: receiving an activation command from a network device, where the activation command indicates to activate a first secondary carrier, and the first secondary carrier is one of secondary carriers of the terminal device; when the first secondary carrier is unknown, determining, based on a carrier aggregation manner of the terminal device, whether to adjustAGC of the first secondary carrier; or when the first secondary carrier is unknown, receiving first indication information from the network device, where the first indication information indicates not to adjust AGC of the first secondary carrier, or indicates a manner of adjusting AGC of the first secondary carrier; receiving a first temporary reference signal from the first secondary carrier; and performing time-frequency synchronization with the first secondary carrier based on the first temporary reference signal.

In this embodiment of this application, the terminal device may use the temporary reference signal to assist in activation of the secondary carrier For example, the terminal device may adjust the AGC based on the temporary reference signal, or may perform time-frequency synchronization with the first secondary carrier based on the temporary reference signal. This reduces dependency of a process of activating the secondary carrier on an SSB. In this case, the process of activating the secondary carrier does not need to depend on a sending cycle of the SSB, so that the process of activating the secondary carrier is accelerated, and a delay of the process of activating the secondary carrier is reduced. In addition, when the terminal device cannot activate the secondary carrier based on the temporary reference signal, the terminal device may still continue to activate the secondary carrier based on a reference signal, for example, the SSB, to provide more options for activating the secondary carrier, and improve a success rate of activating the secondary carrier.

In this embodiment, the determining, based on a carrier aggregation manner of the terminal device, whether to adjust AGC of the first secondary carrier includes: when the carrier aggregation manner of the terminal device is intra-band carrier aggregation, if a difference between transmit power of the first secondary carrier and transmit power of an activated carrier of the terminal device is less than or equal to a first threshold, skipping adjusting the AGC of the first secondary carrier If the carrier aggregation manner of the terminal device is intra-band carrier aggregation, and the difference between the transmit power of the UE on the first secondary carrier and the transmit power of the UE on the activated carrier is less than or equal to the first threshold, it indicates that the difference between the transmit power of the UE on the first secondary carrier and the transmit power of the UE on the activated carrier is not large, andAGC on the activated carrier may also be used for the first secondary carrier Therefore, in this case, the UE may not adjust the AGC of the first secondary carrier, to simplify the process of activating the first secondary carrier

In an optional implementation, the determining, based on a carrier aggregation manner of the terminal device, whether to adjust AGC of the first secondary carrier includes: when the carrier aggregation manner of the terminal device is intra-band carrier aggregation, if a difference between transmit power of the first secondary carrier and transmit power of an activated carrier of the terminal device is greater than a first threshold, and carriers of the terminal device that participate in aggregation are contiguous carriers, receiving a second temporary reference signal from the first secondary carrier, and adjusting the AGC of the first secondary carrier based on the second temporary reference signal; or when the carrier aggregation manner of the terminal device is intra-band carrier aggregation, if carriers of the terminal device that participate in aggregation are contiguous carriers, receiving a second temporary reference signal from the first secondary carrier, and adjusting the AGC of the first secondary carrier based on the second temporary reference signal. If the carrier aggregation manner of the terminal device is an intra-band aggregation manner, and the carriers of the terminal device that participate in aggregation are contiguous carriers, it indicates that a difference between time at which signals on the carriers arrive at the terminal device is small, in other words, a difference between time at which the terminal device receives the signals on the carriers is small. In this case, the terminal device may obtain coarse timing information of the first secondary carrier based on timing information of a primary carrier and symbol-level timing information of the first secondary carrier, so that the terminal device can correctly receive the temporary reference signal on the first secondary carrier based on the coarse timing information of the first secondary carrier Therefore, in this case, the terminal device may adjust the AGC of the first secondary carrier based on the temporary reference signal on the first secondary carrier, to reduce an activation delay of the secondary carrier Alternatively, in addition to that the carrier aggregation manner of the terminal device is an intra-band aggregation manner and the carriers of the terminal device that participate in aggregation are contiguous carriers, the difference between the transmit power of the first secondary carrier and the transmit power of the activated carrier of the terminal device needs to be greater than the first threshold. In this way, the AGC of the first secondary carrier needs to be adjusted to reduce an activation delay of the secondary carrier If the difference between the transmit power of the first secondary carrier and the transmit power of the activated carrier of the terminal device is less than or equal to the first threshold, even if the carrier aggregation manner of the terminal device is the intra-band aggregation manner, and the carriers of the terminal device that participate in aggregation are continuous carriers, skipping adjusting the AGC of the first secondary carrier may alternatively be considered, to further reduce an activation delay of the secondary carrier

In an optional implementation, the determining, based on a carrier aggregation manner of the terminal device, whether to adjust AGC of the first secondary carrier includes: when the carrier aggregation manner of the terminal device is intra-band carrier aggregation, if a difference between transmit power of the first secondary carrier and transmit power of an activated carrier of the terminal device is greater than a first threshold, and carriers of the terminal device that participate in aggregation are non-contiguous carriers, receiving an SSB from the first secondary carrier, and adjusting the AGC of the first secondary carrier based on the SSB; or when the carrier aggregation manner of the terminal device is intra-band carrier aggregation, if carriers of the terminal device that participate in aggregation are non-contiguous carriers, receiving an SSB from the first secondary carrier, and adjusting the AGC of the first secondary carrier based on the SSB. If the carrier aggregation manner of the terminal device is the intra-band carrier aggregation, and the carriers of the terminal device that participate in aggregation are non-contiguous carriers, it indicates that a difference between time at which signals on the carriers arrive at the UE is large, in other words, a difference between time at which the terminal device receives the signals on the carriers is large. In this case, coarse timing information that is of the first secondary carrier and that is obtained by the terminal device based on timing information of a primary carrier may be not accurate enough, and the terminal device may not receive a temporary reference signal from the network device on the first secondary carrier based on the coarse timing information of the first secondary carrier. Therefore, in this case, a manner of adjusting the AGC of the first secondary carrier by using the temporary reference signal is not feasible. Therefore, the terminal device may adjust the AGC of the first secondary carrier based on another reference signal on the first secondary carrier. In other words, in this case, a manner of adjusting the AGC of the first secondary carrier is adjusting the AGC of the first secondary carrier based on another reference signal. In other words, the secondary carrier may be activated in a plurality of manners. Therefore, a success rate of activating the secondary carrier can be improved. For example, the another reference signal includes an SSB and/or a channel state information reference signal (channel state information reference signal, CSI-RS). Alternatively, in addition to that the carrier aggregation manner of the terminal device is an intra-band aggregation manner and the carriers of the terminal device that participate in aggregation are non-contiguous carriers, the difference between the transmit power of the first secondary carrier and the transmit power of the activated carrier of the terminal device needs to be greater than the first threshold. In this way, the AGC of the first secondary carrier needs to be adjusted to reduce an activation delay of the secondary carrier. If the difference between the transmit power of the first secondary carrier and the transmit power of the activated carrier of the terminal device is less than or equal to the first threshold, even if the carrier aggregation manner of the terminal device is the intra-band aggregation manner, and the carriers of the terminal device that participate in aggregation are non-continuous carriers, skipping adjusting the AGC of the first secondary carrier may alternatively be considered, to further reduce an activation delay of the secondary carrier

In an optional implementation, the determining, based on a carrier aggregation manner of the terminal device, whether to adjust AGC of the first secondary carrier includes: when the carrier aggregation manner of the terminal device is intra-band carrier aggregation, if a difference between transmit power of the first secondary carrier and transmit power of an activated carrier of the terminal device is greater than a first threshold, and a timing difference between the first secondary carrier and the activated carrier of the terminal device is greater than cyclic prefix (cyclic prefix, CP) duration, receiving an SSB from the first secondary carrier; and adjusting the AGC of the first secondary carrier based on the SSB. If the carrier aggregation manner of the terminal device is the intra-band carrier aggregation, and the difference between the transmit power of the first secondary carrier and the transmit power of the activated carrier of the terminal device is greater than the first threshold, the terminal device needs to adjust the AGC of the first secondary carrier However, if timing differences between the first secondary carrier and all activated carriers of the terminal device are greater than the CP duration, regardless of an activated carrier whose timing information is used by the terminal device to obtain coarse timing information of the first secondary carrier, the obtained coarse timing information of the first secondary carrier may be not accurate enough. As a result, the temporary reference signal cannot be used to adjust the AGC of the first secondary carrier Therefore, if the timing differences between the first secondary carrier and all the activated carriers of the terminal device are greater than the CP duration, the terminal device may adjust the AGC of the first secondary carrier based on another reference signal (reference signal, RS) on the first secondary carrier In other words, the secondary carrier may be activated in a plurality of manners. Therefore, a success rate of activating the secondary carrier can be improved. For example, the another RS includes an SSB and/or a CSI-RS.

In an optional implementation, the determining, based on a carrier aggregation manner of the terminal device, whether to adjust AGC of the first secondary carrier includes: when the carrier aggregation manner of the terminal device is inter-band carrier aggregation, receiving an SSB from the first secondary carrier; and adjusting the AGC of the first secondary carrier based on the SSB. If the carrier aggregation manner of the terminal device is an inter-band aggregation manner, it indicates that a difference between time at which signals on carriers arrive at the terminal device is large, in other words, a difference between time at which the terminal device receives the signals on the carriers is large, so that the terminal device needs to adjust the AGC of the first secondary carrier. However, coarse timing information that is of the first secondary carrier and that is obtained by the terminal device based on timing information of a primary carrier may be not accurate enough, and the terminal device may not receive a temporary reference signal from the network device on the first secondary carrier based on the coarse timing information of the first secondary carrier. Therefore, the terminal device may adjust the AGC of the first secondary carrier based on another RS on the first secondary carrier In other words, the secondary carrier may be activated in a plurality of manners. Therefore, a success rate of activating the secondary carrier can be improved. For example, the another RS includes an SSB and/or a CSI-RS.

In an optional implementation, the determining, based on a carrier aggregation manner of the terminal device, whether to adjust AGC of the first secondary carrier includes: when the carrier aggregation manner of the terminal device is inter-band carrier aggregation, if a difference between transmit power of the first secondary carrier and transmit power of an activated carrier of the terminal device is greater than a first threshold, and a timing difference between the first secondary carrier and the activated carrier of the terminal device is greater than CP duration, receiving an SSB from the first secondary carrier; and adjusting the AGC of the first secondary carrier based on the SSB. If the carrier aggregation manner of the terminal device is the inter-band carrier aggregation, the difference between the transmit power of the first secondary carrier and the transmit power of the activated carrier of the terminal device may be further determined, and the timing difference between the first secondary carrier and the activated carrier of the terminal device may be further determined. If the difference between the transmit power of the first secondary carrier and the transmit power of the activated carrier of the terminal device is greater than the first threshold, but a timing difference between the first secondary carrier and at least one activated carrier of the UE is less than or equal to the CP duration, the terminal device may obtain coarse timing information of the first secondary carrier based on timing information of one or more activated carriers in the at least one activated carrier, and the terminal device can receive a temporary reference signal from the network device on the first secondary carrier based on the coarse timing information of the first secondary carrier Therefore, the terminal device may adjust the AGC of the first secondary carrier based on the temporary reference signal on the first secondary carrier In other words, in this case, a manner of adjusting the AGC of the first secondary carrier is adjusting the AGC of the first secondary carrier based on the temporary reference signal. Through further consideration of the CP duration, the terminal device may have an opportunity to adjust the AGC of the first secondary carrier by using the temporary reference signal, to improve efficiency of activating the first secondary carrier.

In an optional implementation, the first secondary carrier belongs to a first frequency range. For example, the first frequency range is a low frequency range, for example, an FR 1, or may be another frequency range.

According to a third aspect, a third communication method is provided. The method may be performed by a network device, or may be performed by a circuit system, where the circuit system can implement a function of the network device. For example, the network device is an access network device, for example, a base station. The method includes: sending an activation command to a terminal device, where the activation command indicates to activate a first secondary carrier, and the first secondary carrier is one of secondary carriers of the terminal device; sending an SSB to the terminal device on the first secondary carrier, where the SSB is used to adjustAGC of the first secondary carrier; and when a first condition is met, sending a temporary reference signal to the terminal device, where the temporary reference signal is used by the terminal device to perform time-frequency synchronization with the first secondary carrier

In this embodiment of this application, the temporary reference signal may be used to assist in activation of the secondary carrier, to reduce dependency of a process of activating the secondary carrier on the SSB. In this case, the process of activating the secondary carrier does not need to depend on a sending cycle of the SSB, so that the process of activating the secondary carrier is accelerated, and a delay of the process of activating the secondary carrier is reduced.

In an optional implementation, the first condition includes: starting from completion of sending of the activation command to an end of a third SMTC cycle; or starting from completion of sending of the activation command to an end of a first SMTC cycle; or receiving second indication information from the terminal device, where the second indication information indicates that identification on the first secondary carrier has been completed. If the terminal device adjusts the AGC based on another reference signal, the network device may send, when the first condition is met, the temporary reference signal for the terminal device to perform time-frequency synchronization. For example, the first condition is starting from the completion of the sending of the activation command to the end of the third SMTC cycle. In this way, sufficient time can be reserved for an AGC adjustment process of the terminal device and a process of identifying the first secondary carrier. For another example, the first condition is starting from the completion of the sending of the activation command to the end of the first SMTC cycle. In this manner, the terminal device can perform time-frequency synchronization with the first secondary carrier as soon as possible, and an activation delay of the first secondary carrier can be reduced. For still another example, the first condition is that the network device receives the second indication information from the UE, where the second indication information may indicate that the identification on the first secondary carrier has been completed. For example, after completing the identification on the first secondary carrier, the terminal device may send the second indication information to the network device. After receiving the second indication information, the network device may send the temporary reference signal, so that the terminal device performs time-frequency synchronization with the first secondary carrier In this way, the network device can send the temporary reference signal in time, and an activation delay of the secondary carrier can be reduced. In addition, the network device sends the temporary reference signal when the terminal device needs the temporary reference signal, so that utilization of the temporary reference signal is improved and a waste of resources is reduced.

In an optional implementation, the second indication information is an index of the SSB, or the second indication information is a scheduling request (scheduling request, SR). For example, the second indication information may be implemented by using an SSB index. Both the AGC adjustment process of the terminal device and the process of identifying the first secondary carrier may be completed based on another reference signal from the network device. The another reference signal is, for example, an SSB. In this case, the terminal device sends an index of the SSB to the network device, to indicate that the terminal device has identified the SSB sent by the network device. Therefore, the network device can determine that the terminal device has completed the identification on the first secondary carrier For another example, the second indication information may be implemented by using the SR. The SR is originally used by the terminal device to request a resource from the network device. However, that the terminal device notifies the network device that the identification on the first secondary carrier has been completed is actually to trigger the network device to send the temporary RS for the terminal device to perform time-frequency synchronization with the first secondary carrier Therefore, the second indication information may also be considered as implicitly requesting a resource. In this case, when the SR is used as the second indication information, the SR is reused without departing from an original function of the SR.

In an optional implementation, the first secondary carrier belongs to a first frequency range. For example, the first frequency range is a low frequency range, for example, an FR 1, or may be another frequency range.

According to a fourth aspect, a fourth communication method is provided. The method may be performed by a terminal device, or may be performed by a circuit system, where the circuit system can implement a function of the terminal device, or may be performed by a large device including the terminal device. The method includes: receiving an activation command from a network device, where the activation command indicates to activate a first secondary carrier, and the first secondary carrier is one of secondary carriers of the terminal device; when at least one activated carrier exists in a first frequency band in a second frequency range, or when the first secondary carrier is known, skipping adjusting AGC of the first secondary carrier; or when no activated carrier exists in a first frequency band in a second frequency range, and the first secondary carrier is unknown, receiving an SSB from the first secondary carrier, and adjusting AGC of the first secondary carrier based on the SSB, where the first frequency band is a frequency band in which the first secondary carrier is located; receiving a temporary reference signal from the first secondary carrier; and performing time-frequency synchronization with the first secondary carrier based on the temporary reference signal. In this embodiment of this application, even if the terminal device does not adjust theAGC, or the terminal device adjusts the AGC based on another reference signal, the terminal device may still perform time-frequency synchronization with the first secondary carrier based on the temporary reference signal. In this way, an activation delay of the secondary carrier can also be reduced to some extent.

According to a fifth aspect, a communication apparatus is provided. The communication apparatus may be the terminal device according to any one of the first aspect to the fourth aspect, or an electronic device (for example, a circuit system) configured in the terminal device, or a large device including the terminal device. The terminal device includes a corresponding means (means) or module configured to perform the foregoing method. For example, the communication apparatus includes a processing unit (sometimes also referred to as a processing module) and a transceiver unit (sometimes also referred to as a transceiver module).

For example, the transceiver unit is configured to receive an activation command from a network device, where the activation command indicates to activate a first secondary carrier, and the first secondary carrier is one of secondary carriers of the terminal device.

The processing unit is configured to: when the first secondary carrier is known, determine, based on a measurement cycle of the terminal device for the first secondary carrier, whether to adjust AGC of the first secondary carrier, where a temporary reference signal is used to adjust the AGC of the first secondary carrier

The transceiver unit is further configured to receive a first temporary reference signal from the first secondary carrier

The processing unit is further configured to perform time-frequency synchronization with the first secondary carrier based on the first temporary reference signal.

For another example, the transceiver unit is configured to receive an activation command from a network device, where the activation command indicates to activate a first secondary carrier, and the first secondary carrier is one of secondary carriers of the terminal device.

The processing unit is configured to: when the first secondary carrier is unknown, determine, based on a carrier aggregation manner of the terminal device, whether to adjust AGC of the first secondary carrier. Alternatively, the processing unit is configured to: when the first secondary carrier is unknown, receive first indication information from the network device through the transceiver unit, where the first indication information indicates not to adjust AGC of the first secondary carrier, or indicates a manner of adjusting AGC of the first secondary carrier.

The transceiver unit is further configured to receive a first temporary reference signal from the first secondary carrier

The processing unit is further configured to perform time-frequency synchronization with the first secondary carrier based on the first temporary reference signal.

For another example, the transceiver unit is configured to receive an activation command from a network device, where the activation command indicates to activate a first secondary carrier, and the first secondary carrier is one of secondary carriers of the terminal device.

The processing unit is configured to: when at least one activated carrier exists in a first frequency band in a second frequency range, or when the first secondary carrier is known, skip adjusting AGC of the first secondary carrier Alternatively, the processing unit is configured to: when no activated carrier exists in a first frequency band in a second frequency range, and the first secondary carrier is unknown, receive an SSB from the first secondary carrier through the transceiver unit, and the processing unit is further configured to adjustAGC of the first secondary carrier based on the SSB, where the first frequency band is a frequency band in which the first secondary carrier is located.

The transceiver unit is further configured to receive a temporary reference signal from the first secondary carrier.

The processing unit is further configured to perform time-frequency synchronization with the first secondary carrier based on the temporary reference signal.

For another example, the communication apparatus includes a processor, coupled to a memory, and configured to execute instructions in the memory, to implement the method performed by the terminal device in any one of the first aspect to the fourth aspect. Optionally, the communication apparatus further includes other components, for example, an antenna, an input/output module, and an interface. These components may be hardware, software, or a combination of software and hardware.

According to a sixth aspect, a communication apparatus is provided. The communication apparatus may be the network device according to any one of the first aspect to the fourth aspect. The communication apparatus has a function of the network device. The network device is, for example, a base station, or a baseband apparatus in the base station. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module).

For example, the transceiver unit is configured to send an activation command to a terminal device, where the activation command indicates to activate a first secondary carrier, and the first secondary carrier is one of secondary carriers of the terminal device.

The transceiver unit is further configured to send an SSB to the terminal device on the first secondary carrier, where the SSB is used to adjustAGC of the first secondary carrier.

The transceiver unit is further configured to: when a first condition is met, send a temporary reference signal to the terminal device, where the temporary reference signal is used by the terminal device to perform time-frequency synchronization with the first secondary carrier (alternatively, the processing unit is configured to determine that a first condition is met, and the transceiver unit is configured to send a temporary reference signal to the terminal device, where the temporary reference signal is used by the terminal device to perform time-frequency synchronization with the first secondary carrier).

For another example, the communication apparatus includes a processor, coupled to a memory, and configured to execute instructions in the memory, to implement the method performed by the network device in any one of the first aspect to the fourth aspect. Optionally, the communication apparatus further includes other components, for example, an antenna, an input/output module, and an interface. These components may be hardware, software, or a combination of software and hardware.

According to a seventh aspect, a computer-readable storage medium is provided. The computer-readable storage medium is configured to store a computer program or instructions. When the computer program or the instructions are run, the method performed by the terminal device or the network device in the foregoing aspects is implemented.

According to an eighth aspect, a computer program product including instructions is provided. When the computer program product runs on a computer, the methods according to the foregoing aspects are implemented.

In embodiments of this application, the temporary reference signal may be used to assist in the activation of the secondary carrier, to reduce the dependency of the process of activating the secondary carrier on the SSB. In this case, the process of activating the secondary carrier does not need to depend on the sending cycle of the SSB, so that the process of activating the secondary carrier is accelerated, and the delay of the process of activating the secondary carrier is reduced.

### BRIEF DESCRIPTION OF DRAWINGS

FIG. 1A is a schematic diagram of a communication system according to an embodiment of this application;
FIG. 1B is a flowchart of a secondary carrier activation process;
FIG. 2A is a schematic diagram of an application scenario according to an embodiment of this application;
FIG. 2B is a schematic diagram of another application scenario according to an embodiment of this application;
FIG. 2C is a schematic diagram of still another application scenario according to an embodiment of this application;
FIG. 3 is a flowchart of a communication method according to an embodiment of this application;
FIG. 4A is a flowchart of another communication method according to an embodiment of this application;
FIG. 4B is a schematic diagram of activating a secondary carrier based on an SSB;
FIG. 4C is a schematic diagram of activating a secondary carrier based on a temporary reference signal according to an embodiment of this application;
FIG. 5 is a flowchart of still another communication method according to an embodiment of this application;
FIG. 6 is a schematic block diagram of a communication apparatus according to an embodiment of this application;
FIG. 7 is a schematic block diagram of a terminal device according to an embodiment of this application; and
FIG. 8 is a schematic block diagram of a network device according to an embodiment of this application.

### DESCRIPTION OF EMBODIMENTS

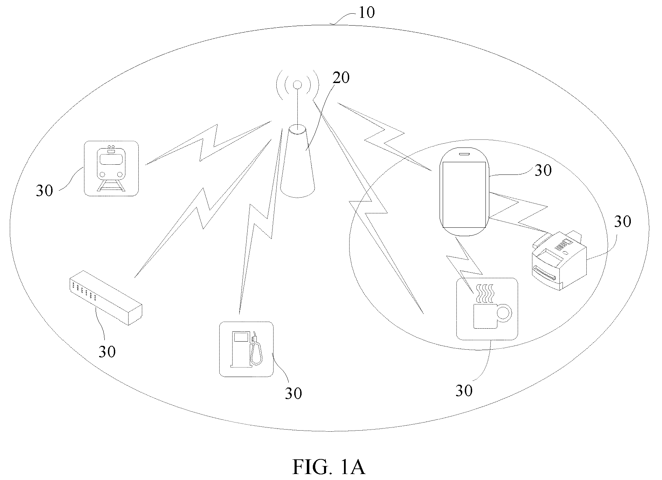

A technology provided in embodiments of this application may be applied to a communication system 10 shown in FIG. 1A. The communication system 10 includes one or more communication apparatuses 30 (for example, a terminal device). The one or more communication apparatuses 30 are connected to one or more core network devices through one or more access network devices 20, to implement communication between a plurality of communication devices. For example, the communication system may be a communication system supporting a 2G, 3G, 4G, or 5G (sometimes also referred to as new radio, NR) access technology, a wireless fidelity (wireless fidelity, Wi-Fi) system, a cellular system related to the 3rd generation partnership project (3rd generation partnership project, 3GPP), a communication system supporting convergence of a plurality of radio technologies, or a future-oriented evolved system.

The following describes some terms in embodiments of this application, to facilitate understanding of a person skilled in the art.

In embodiments of this application, the terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a circuit system) built in the foregoing device. The terminal device is configured to connect persons, things, machines, and the like, and may be widely used in various scenarios, for example, including but not limited to the following scenarios: cellular communication, device-to-device (device-to-device, D2D) communication, vehicle-to-everything (vehicle-to-everything, V2X), machine-to-machine/machine-type communications (machine-to-machine/machine-type communications, M2M/MTC), internet of things (internet of things, IoT), virtual reality (virtual reality, VR), augmented reality (augmented reality, AR), industrial control (industrial control), self driving (self driving), telemedicine (remote medical), smart grid (smart grid), smart furniture, smart office, smart wearable, smart transportation, smart city (smart city), uncrewed aerial vehicle, and robot. The terminal device sometimes may be referred to as user equipment (user equipment, UE), a terminal, an access station, a UE station, a remote station, a wireless communication device, a user apparatus, or the like. For ease of description, in embodiments of this application, an example in which the terminal device is UE is used for description.

The network device in embodiments of this application includes, for example, an access network device and/or a core network device. The access network device is a device having a wireless transceiver function, and is configured to communicate with the terminal device. The access network device includes but is not limited to a base transceiver station (BTS), a NodeB (NodeB), an evolved NodeB (eNodeB/eNB, or gNodeB/gNB), a transmission reception point (transmission reception point, TRP), a subsequent evolved base station of the 3rd generation partnership project (3rd generation partnership project, 3GPP), an access node in a wireless fidelity (wireless fidelity, Wi-Fi) system, a wireless relay node, a wireless backhaul node, and the like in the foregoing communication system. The base station may be a macro base station, a micro base station, a pico base station, a small cell, a relay station, or the like. A plurality of base stations may support the foregoing networks of a same access technology, or may support the foregoing networks of different access technologies. The base station may include one or more co-site or non-co-site transmission reception points. The network device may alternatively be a radio controller, a central unit (central unit, CU), and/or a distributed unit (distributed unit, DU) in a cloud radio access network (cloud radio access network, CRAN) scenario. The network device may alternatively be a server, a wearable device, a vehicle-mounted device, or the like. For example, a network device in a vehicle-to-everything (vehicle-to-everything, V2X) technology may be a road side unit (road side unit, RSU). The following provides descriptions by using an example in which the access network device is a base station. A plurality of network devices in the communication system may be base stations of a same type, or may be base stations of different types. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices implementing a core network function in systems of different access technologies may be different. This is not limited in embodiments of this application. A 5G system is used as an example. The core network device includes an access and mobility management function (access and mobility management function, AMF), a session management function (session management function, SMF), a user plane function (user plane function, UPF), or the like.

In embodiments of this application, a communication apparatus configured to implement a network device function may be a network device, or may be an apparatus, for example, a circuit system, that can support the network device in implementing the function. The apparatus may be installed in the network device. In technical solutions provided in embodiments of this application, the technical solutions provided in embodiments of this application are described by using an example in which the apparatus configured to implement the network device function is a network device.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one of a, b, or c represents: a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not used to limit sizes, content, a sequence, a time sequence, application scenarios, priorities, importance, or the like of the plurality of objects. For example, first duration and second duration may be a same piece of duration, or may be different pieces of duration. In addition, these names do not indicate different lengths, priorities, application scenarios, importance, or the like of the two pieces of duration.

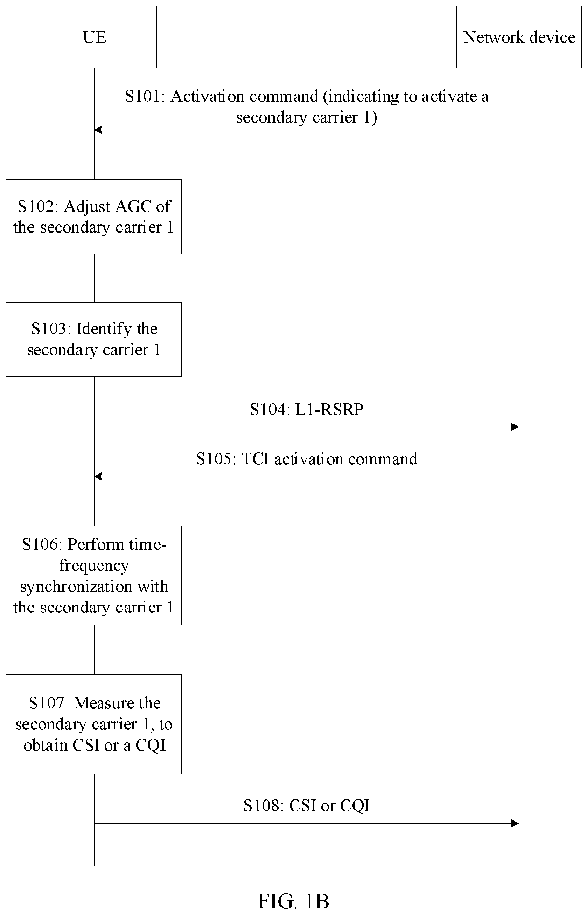

In a CA scenario, UE may aggregate a plurality of carriers, and the carriers participating in aggregation include one primary carrier and one or more secondary carriers. If a network device needs to configure the UE to work on a specific secondary carrier, the network device needs to indicate the UE to activate the secondary carrier With reference to FIG. 1B, the following describes a process of activating a secondary carrier

S101: A base station sends an activation command to UE, and the UE receives the activation command from the base station. The activation command may indicate to activate a specific secondary carrier, for example, indicate to activate a secondary carrier 1.

S102: The UE adjusts AGC of the secondary carrier 1.

The UE may receive an SSB on the secondary carrier 1, and adjust the AGC of the secondary carrier 1 based on the received SSB. If the UE has not identified the secondary carrier 1, or although the UE has identified the secondary carrier 1, a measurement cycle (measurement cycle, MC) of the UE on the secondary carrier 1 is greater than or equal to 160 ms, the UE needs to perform S102. Otherwise, the UE does not need to perform S102.

S103: The UE performs detection on the secondary carrier 1, in other words, the UE identifies the secondary carrier 1. The process may be referred to as a cell identification process, or referred to as a carrier identification process. The UE performs detection on the secondary carrier 1, including, for example, performing detection on a primary synchronization signal (primary synchronization signal, PSS) and/or a secondary synchronization signal (secondary synchronization signal, SSS) of the secondary carrier 1. Through identification on the secondary carrier 1, an identity (identity, ID) of the secondary carrier 1 and symbol-level timing information of the secondary carrier 1 can be obtained based on the SSB.

The UE may receive the SSB on the secondary carrier 1, and obtain the identity (ID) of the secondary carrier 1 and the symbol-level timing information of the secondary carrier 1 based on the SSB, to complete the identification on the secondary carrier 1. The symbol-level timing information may be understood as boundary timing of an orthogonal frequency division multiplexing (orthogonal frequency division multiplexing, OFDM) symbol (symbol). Certainly, the secondary carrier identification process may further include another step. This is not limited in this embodiment of this application. If the UE has not identified the secondary carrier 1, S103 may be performed. Otherwise, the UE does not need to perform S103.

S104: The UE sends layer 1 reference signal received power (L1-RSRP) of the secondary carrier 1 to a network device, and correspondingly, the network device receives the L1-RSRP from the UE. RSRP is reference signal received power (reference signal received power).

If the secondary carrier 1 belongs to an FR 2, there is no activated carrier in the FR 2, and the UE has not identified the secondary carrier 1, S104 may be performed. Otherwise, S104 does not need to be performed.

S105: The network device sends a transmission configuration indication (transmission configuration indication, TCI) activation command to the UE, and correspondingly, the UE waits for and receives the TCI activation command from the network device. The TCI activation command may be used to receive a physical downlink control channel (physical downlink control channel, PDCCH) and/or a physical downlink shared channel (physical downlink shared channel, PDSCH) through the secondary carrier 1 after the secondary carrier 1 is activated.

If the secondary carrier 1 belongs to the FR 2, and there is no activated carrier in the FR 2, S105 may be performed. Otherwise, S105 does not need to be performed. Alternatively, even if the secondary carrier belongs to an FR 1, S105 may be performed in a corresponding case.

S106: The UE performs time-frequency synchronization with the secondary carrier 1, in other words, the UE performs precise timing with the secondary carrier 1.

The UE may receive the SSB on the secondary carrier 1, and perform time-frequency synchronization with the secondary carrier 1 based on the received SSB. If the secondary carrier 1 belongs to the FR 2, and no SSB is configured for the secondary carrier 1, S106 does not need to be performed. Otherwise, S106 needs to be performed.

S107: The UE measures the secondary carrier 1, to obtain channel state information (channel state information, CSI) or a channel quality indicator (channel quality indicator, CQI).

The UE may receive the SSB on the secondary carrier 1, and perform measurement on the received SSB, to obtain the CSI or the CQI.

S108: The UE sends the CSI to the network device, and correspondingly, the network device receives the CSI from the UE. Alternatively, the UE sends the CQI to the network device, and correspondingly, the network device receives the CQI from the UE.

After receiving the CSI or the CQI from the UE, the network device can determine that the secondary carrier 1 has been activated.

It can be learned from the foregoing procedure that S102, S103, and S106 are all performed based on the SSB. Therefore, execution time of these steps is related to a sending cycle of the SSB or an SMTC cycle. However, the sending cycle of the SSB is usually large, and is usually greater than or equal to 20 ms. Consequently, an activation delay of the secondary carrier is also high, and this problem cannot be resolved currently.

In view of this, the technical solutions in embodiments of this application are provided. In embodiments of this application, a temporary reference signal may be used to assist in activation of a secondary carrier, to reduce dependency of a process of activating the secondary carrier on an SSB. In this case, the process of activating the secondary carrier does not need to depend on a sending cycle of the SSB, so that the process of activating the secondary carrier is accelerated, and a delay of the process of activating the secondary carrier is reduced. In addition, in embodiments of this application, a manner of activating the secondary carrier based on the temporary reference signal is set. To be specific, both a network device and a terminal device can determine a case in which the temporary reference signal needs to be used and how to use the temporary reference signal. This standardizes behavior of the network device and the terminal device, and achieves common cognition of the terminal device and the network device.

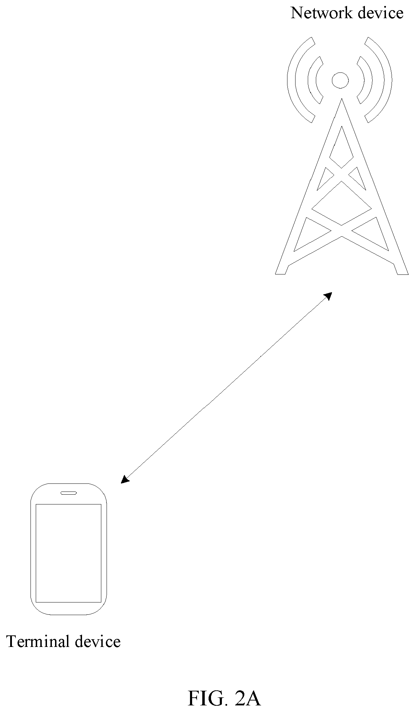

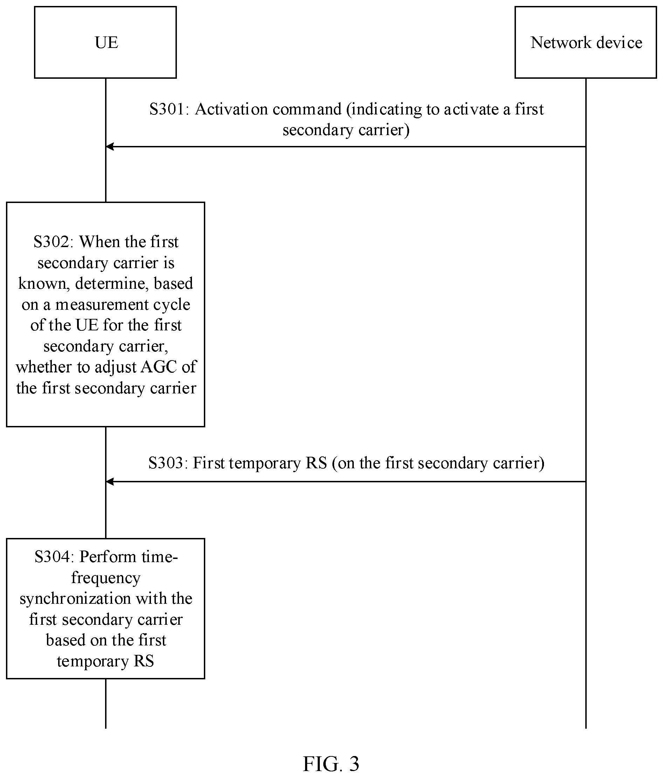

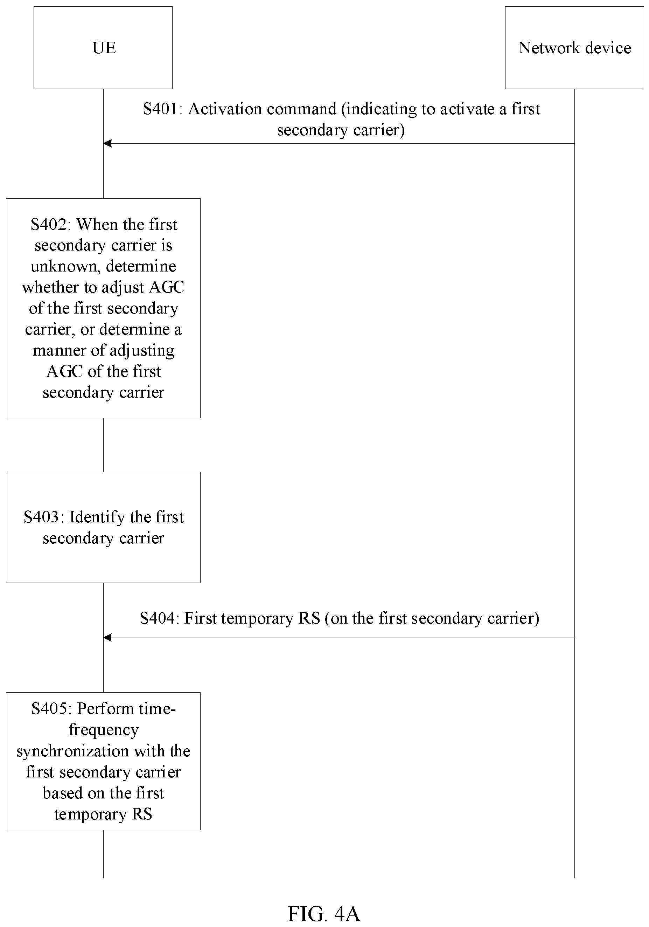

FIG. 2A shows a communication network architecture in the communication system 10 according to an embodiment of this application. A subsequently provided embodiment shown in FIG. 3 or FIG. 4A is applicable to the architecture. A network device included in FIG. 2A is, for example, the access network device 20 included in the communication system 10, and a terminal device included in FIG. 2A is, for example, the communication apparatus 30 included in the communication system 10. The network device can communicate with the terminal device.

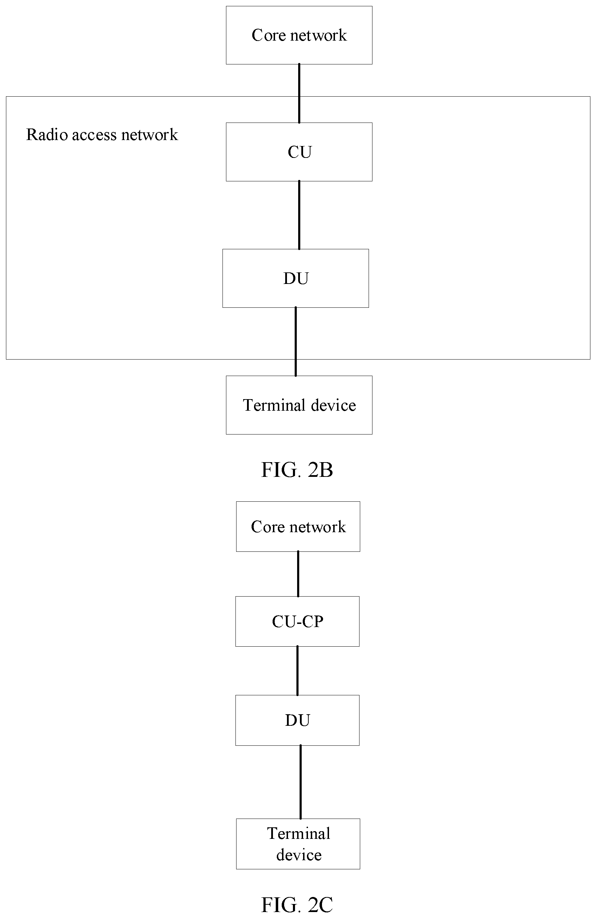

FIG. 2B shows another communication network architecture in the communication system 10 according to an embodiment of this application. As shown in FIG. 2B, the communication system includes a core network (new core, CN) and a radio access network (radio access network, RAN). A network device (for example, a base station) in the RAN is, for example, the access network device 20 in the communication system 10. The network device in the RAN includes a baseband apparatus and a radio frequency apparatus. The baseband apparatus may be implemented by one or more nodes. The radio frequency apparatus may be implemented remotely and independently from the baseband apparatus, or may be integrated into the baseband apparatus, or may be partially remotely deployed and partially integrated into the baseband apparatus. The network device in the RAN may include a CU and a DU. If there are a plurality of DUs, the plurality of DUs may be controlled by one CU in a centralized manner. The CU and the DU may be obtained through division based on wireless network protocol layer functions of the CU and the DU. For example, functions of a packet data convergence protocol (packet data convergence protocol, PDCP) layer and a protocol layer above the PDCP layer are set on the CU, and functions of protocol layers below the PDCP layer, such as a radio link control (radio link control, RLC) layer and a media access control (media access control, MAC) layer, are set on the DU. It should be noted that such protocol layer division is merely an example, and division may alternatively be performed at another protocol layer. The radio frequency apparatus may be remotely deployed and not deployed in the DU, or may be integrated into the DU, or may be partially remotely deployed and partially integrated into the DU. This is not limited in this embodiment of this application.

FIG. 2C shows another communication network architecture in the communication system 10 according to an embodiment of this application. Compared with the architecture shown in FIG. 2B, a control plane (control plane, CP) and a user plane (user plane, UP) of a CU may be further separated into different entities for implementation, and the different entities are separately a control plane CU entity (CU-CP entity) and a user plane CU entity (CU-UP entity). In the network architecture, signaling generated by the CU may be sent to a terminal device through a DU, or signaling generated by the terminal device may be sent to the CU through the DU. The DU may transparently transmit the signaling to the terminal device or the CU by directly encapsulating the signaling at a protocol layer without parsing the signaling. In the network architecture, the CU is classified as a network device on a RAN side. In addition, the CU may alternatively be classified as a network device on a CN side. This is not limited in this embodiment of this application.

The following describes methods provided in embodiments of this application with reference to the accompanying drawings. In embodiments of this application, two concepts "carrier" and "cell" may be interchanged. For example, a "secondary carrier" may also be referred to as a "secondary cell", and a "primary carrier" may also be referred to as a "primary cell". In embodiments of this application, a temporary reference signal may meet one of the following items or any combination of a plurality of items in the following items: 1. The temporary reference signal is, for example, an aperiodic signal, or may be a periodic signal. If the temporary reference signal is a periodic signal, optionally, a sending cycle of the temporary reference signal may be less than a sending cycle of an SSB. 2. The temporary reference signal may be used for activation of a secondary carrier. 3. The temporary reference signal may be used for time-frequency tracking and/or AGC adjustment in a process of activating the secondary carrier. 4. The temporary reference signal may be triggered by a network device, and the network device is, for example, an access network device. 5. After the tracking, the temporary reference signal is no longer used in a procedure of the secondary carrier For example, an existing signal may be used as the temporary reference signal. The existing reference signal has another function, and the signal is further used to complete a function of the temporary reference signal in embodiments of this application. Therefore, in embodiments of this application, a reference signal provided in embodiments of this application is referred to as a "temporary" reference signal, because the signal may be "temporarily" used as a reference signal in embodiments of this application. For another example, a new signal may alternatively be defined in a protocol, and the signal may be used as the temporary reference signal. In this case, the name "temporary reference signal" may also be changed, for example, may be changed to "specific (specific) reference signal".

It can also be learned from the foregoing descriptions that the name "temporary reference signal" is merely an example, and the name does not represent a limitation on the signal. In other words, the "temporary reference signal" may also have another name, for example, may be referred to as a "reference signal", or may be referred to as a "specific reference signal", or may be referred to as a "first reference signal" or an "A reference signal". In addition, if the "temporary reference signal" is referred to as the "first reference signal", a "first temporary reference signal" described below may also be renamed as a "temporary reference signal 1", a "second temporary reference signal" described below may also be renamed as a "temporary reference signal 2", and so on, to avoid unclear names.

In an example, in embodiments of this application, if a first secondary carrier is a carrier of an FR 1, when the first secondary carrier meets the following conditions, UE considers that the first secondary carrier is a known secondary carrier Otherwise, the UE considers that the first secondary carrier is an unknown secondary carrier
1. The UE has reported a valid measurement result of the first secondary carrier within a period of time before an activation command is received.
2. In an activation process of the UE and within a period of time before the activation process, a reference signal of the first secondary carrier measured by the UE always remains detectable, where "detectable" may mean at least one of the following: A signal-to-noise ratio (signal to interference plus noise ratio, SINR) of the reference signal of the first secondary carrier is greater than or equal to a first preset value, interference power spectral density of the reference signal of the first secondary carrier is greater than or equal to a second preset value, reference signal received power of the first secondary carrier is greater than or equal to a third preset value, or the like.

In an example, in embodiments of this application, if a first secondary carrier is a carrier of a frequency range 2 (frequency range 2, FR 2), when the first secondary carrier meets the following conditions, UE considers that the first secondary carrier is a known secondary carrier Otherwise, the UE considers that the first secondary carrier is an unknown secondary carrier
1. The UE has reported a valid L3-RSRP measurement of a reference signal within a period of time before a latest TCI activation command and a semi-persistent CSI-RS activation command are received.
2. The UE receives activation signaling of the first secondary carrier after reporting the L3-RSRP, and the activation signaling is not later than the TCI received by the UE.
3. An SSB reported by the UE always remains detectable (where for "detectable", refer to the foregoing descriptions) from reporting of the L3-RSRP to reporting of a valid CQI, and the TCI is configured based on one of recently reported SSBs.

FIG. 3 describes a communication method according to an embodiment of this application. In this embodiment of this application, UE has identified a to-be-activated first secondary carrier (in other words, the first secondary carrier is known). For a process in which the UE identifies the first secondary carrier, refer to descriptions of the procedure shown in FIG. 1B.

S301: A network device sends an activation command to the UE, and the UE receives the activation command from the network device. The activation command may indicate to activate a specific secondary carrier, for example, indicate to activate the first secondary carrier, where the first secondary carrier is one of aggregated carriers of a terminal device. In this embodiment of this application, the first secondary carrier belongs to, for example, a first frequency range, and the first frequency range is, for example, an FR 1.

For example, if the first secondary carrier of the UE is in an inactive state, and the network device needs to indicate the UE to activate the first secondary carrier, the network device may send the activation command to the UE. For example, the activation command is sent by using a media access control (media access control, MAC) control element (control element, CE), or is sent by using downlink control information (downlink control information, DCI), or may be sent in another manner.

S302: Determine, based on a measurement cycle of the UE on the first secondary carrier, whether to adjust AGC of the first secondary carrier

If the measurement cycle of the UE on the first secondary carrier is less than or equal to a first measurement cycle, it indicates that the measurement cycle on the secondary carrier is small, and previously determined AGC may continue to be used this time. Therefore, in this case, the AGC of the first secondary carrier may not be adjusted, to reduce power consumption of the UE, and simplify a process of activating the secondary carrier The first measurement cycle may be specified in a protocol, or may be configured by the network device, or may be determined in another manner. For example, the first measurement cycle is 160 ms, or may be another value.

In addition, usually, activation duration of a secondary carrier is equal to T_{HARQ} + *T_{activation_time} + T_{CSI_Reporting},* where T_{HARQ} represents duration required for S101 in FIG. 1B, in other words, represents duration required by the UE to receive and process the activation command from the base station. If the activation command fails to be sent, retransmission may be involved. Therefore, required time is represented by T_{HARQ}. *T_{CSI_Reporting}* represents duration required for S108 in FIG. 1B, in other words, represents duration required by the UE to obtain the CSI through measurement and send the CSI to the base station. *T_{activation_time}* represents total duration required for steps other than S101 and S108 in FIG. 1B. Because S102 to S107 in FIG. 1B may be considered as actual activation duration of the secondary carrier, *T_{activation_time}* may also be referred to as activation duration of the secondary carrier. When the measurement cycle of the UE on the first secondary carrier is less than or equal to the first measurement cycle, the AGC of the first secondary carrier is not adjusted. Optionally, *T_{activation_time}* (where in this case, *T_{activation_time}* represents actual activation duration of the first secondary carrier) may be determined based on first duration. The first duration is, for example, duration in which the UE waits for and obtains (or receives) a first complete temporary RS burst (burst) from the first secondary carrier

In an optional implementation of determining *T_{activation_time}* based on the first duration, *T_{activation_time}* may meet the following relationship: ${T}_{activation _ time} = {T}_{first _ TempRS} + 5$ (Formula 1)

*T_{first_TempRS}* represents the first duration. The formula 1 is merely an example. For example, the value 5 in the formula 1 may alternatively be replaced with another value, or may be replaced with another function. Alternatively, in the formula 1, *T_{first_TempRS} + 5* may be replaced with *f*(*T_{first_TempRS}*), where *f*(x) represents a function with x as a variable, and the function may be an addition function, or may be a function in another calculation form. In this case, the activation duration of the first secondary carrier is short, so that efficiency of activating the secondary carrier can be improved.

Alternatively, if the measurement cycle of the UE on the first secondary carrier is greater than a first measurement cycle, it indicates that the measurement cycle on the secondary carrier is large. If previously determined AGC continues to be used this time, the AGC may be not accurate enough. Therefore, in this case, the AGC of the first secondary carrier may be adjusted. If an SSB is used to adjust the AGC, and the SSB is periodically sent, time required for adjusting the AGC is related to a sending cycle of the SSB or an SMTC cycle. However, the sending cycle of the SSB is usually large, and is usually greater than or equal to 20 ms. Consequently, an activation delay of the secondary carrier is also high. Therefore, in this embodiment of this application, the AGC may be adjusted by using a temporary (temporary) RS. The temporary RS may be an aperiodic signal. For example, the temporary RS may be sent when the UE needs the temporary RS, so that activation time of the secondary carrier does not depend on a sending cycle of the reference signal, and the activation delay of the secondary carrier is reduced. Alternatively, the temporary RS may be a periodic signal. For example, a sending cycle of the temporary RS may be less than or equal to the sending cycle of the SSB. This can also reduce the activation delay of the secondary carrier

In an implementation of the temporary RS, a tracking reference signal (tracking reference signal, TRS) may be used as the temporary RS. For example, in the frequency range (frequency range, FR) 1, the TRS may occupy four channel state information (channel state information reference signal, CSI-RS) resources in two slots (slot); in an FR 2, the TRS may occupy four CSI-RS resources in two slots, or may occupy two CSI-RS resources in one slot. Alternatively, in addition to the TRS, another signal may be used as the temporary RS. This is not limited in this embodiment of this application.

In this embodiment of this application, because the UE has identified the first secondary carrier, the UE may obtain symbol-level timing information of the first secondary carrier through identification on the first secondary carrier In a carrier aggregation scenario, because the UE performs communication on a primary carrier, timing information of the primary carrier is known to the UE, where the timing information of the primary carrier includes a system frame number (system frame number, SFN) boundary, a slot boundary, an OFDM symbol boundary, and the like of the primary carrier. Regardless of whether a carrier aggregation manner of the UE is an intra-band aggregation manner or an inter-band (inter-band) aggregation manner, the UE may derive all timing information of a secondary carrier based on the timing information of the primary carrier and symbol-level timing information of the secondary carrier The timing information of the secondary carrier derived by the UE based on the timing information of the primary carrier and the symbol-level timing information of the secondary carrier may be inaccurate, and therefore may be referred to as coarse timing information of the secondary carrier For example, the UE may derive coarse timing information of the first secondary carrier based on the timing information of the primary carrier and the symbol-level timing information of the first secondary carrier. For example, the network device sends a second temporary RS on the first secondary carrier After obtaining the coarse timing information of the first secondary carrier, the UE may also correctly receive the second temporary RS from the first secondary carrier (in other words, receive the second temporary RS from the network device on the first secondary carrier), so that the UE may adjust the AGC of the first secondary carrier by using the second temporary RS. In embodiments of this application, the UE adjusts the AGC of the first secondary carrier based on the temporary RS, including, for example, adjusting a level gain based on received signal power of the temporary RS, to keep an output signal of the UE at an appropriate amplitude.

If the measurement cycle of the UE on the first secondary carrier is greater than the first measurement cycle, in this embodiment of this application, the AGC of the first secondary carrier may be adjusted, to improve accuracy of the AGC of the first secondary carrier. In addition, in this embodiment of this application, the AGC of the first secondary carrier may be adjusted based on the temporary RS, so that dependency on the sending cycle of the SSB is reduced, and efficiency of activating the secondary carrier is improved.

In this case, if the carrier aggregation manner of the UE is intra-band (intra-band) carrier aggregation, actually, the AGC that is of the first secondary carrier and that is determined by the UE may also be applied to another carrier, of the UE, that participates in carrier aggregation. Therefore, when the UE adjusts the AGC of the first secondary carrier, in addition to the temporary RS on the first secondary carrier, the UE further needs to refer to an RS on an activated carrier, of the UE, that participates in carrier aggregation. In view of this, if it is determined, based on the measurement cycle, that the AGC of the first secondary carrier needs to be adjusted, and the carrier aggregation manner of the UE is the intra-band carrier aggregation, this embodiment of this application provides several manners for AGC adjustment. The following describes the manners by using examples.

Manner 1: The AGC adjustment is related to a carrier other than the first secondary carrier in the aggregated carriers of the UE, in other words, sending time of the temporary RS on the first secondary carrier is required to be aligned with sending time of the RS on the activated carrier in the aggregated carriers of the UE. There may be one or more activated carriers in the carriers of the UE that participate in aggregation. In the manner 1, time at which the network device sends the temporary RS on the first secondary carrier is the same as time at which the network device sends RSs on the one or more activated carriers. It may be considered that the network device is required to send reference signals on a plurality of carriers at the same time.

That sending time of signals on two carriers is aligned means, for example, that the sending time of the signals on the two carriers is the same. For example, if two signals are sent in a same slot (slot), it is considered that sending time of the two signals is the same. For another example, if two signals are sent on a same OFDM symbol, it is considered that sending time of the two signals is the same. The RS on the activated carrier of the UE includes, for example, one or more of the following: a CSI-RS, an SSB, or a temporary RS. There may be one or more activated carriers of the UE. In this case, an RS on one of the activated carriers may include a CSI-RS, or include an SSB, or include a temporary RS, or include a CSI-RS and an SSB, or include an SSB and a temporary RS, or include a CSI-RS and a temporary RS, or include a CSI-RS, an SSB, and a temporary RS.

According to an existing protocol, for the FR 1, if the carrier aggregation manner of the UE is the intra-band aggregation manner, all activated carriers and to-be-activated carriers that are aggregated in an intra-band manner need to send SSBs in a same slot (slot), so that the UE can adjust the AGC based on the SSBs received on the carriers. The same is true for the FR 2. If the carrier aggregation manner of the UE is the intra-band aggregation manner, all activated carriers and to-be-activated carriers that are aggregated in the intra-band manner need to send SSBs in a same slot, so that the UE can adjust the AGC based on the SSBs received on the carriers.

Therefore, in the manner 1, it is specified that the sending time of the temporary RS on the first secondary carrier is aligned with the sending time of the RS on the activated carrier in the aggregated carriers of the UE, so that the technical solution in this embodiment of this application can be better compatible with the existing protocol. In addition, sending time of reference signals on carriers is aligned, so that time at which the UE receives the reference signals on the carriers is almost the same. In this case, the UE may adjust the AGC based on recently received reference signals, so that the AGC is adjusted more accurately, and adjusted AGC may be used for the carriers of the UE that participate in aggregation.

Manner 2: The AGC adjustment is irrelevant (or unrelated) to a carrier other than the first secondary carrier in the aggregated carriers of the UE, in other words, sending time of the temporary RS on the first secondary carrier is not required to be aligned with sending time of the RS on the activated carrier in the aggregated carriers of the UE.

In the manner 2, it is not specified that the sending time of the temporary RS on the first secondary carrier is aligned with the sending time of the RS on the activated carrier in the aggregated carriers of the UE. Therefore, when the network device sends reference signals on carriers, the sending time of the temporary RS on the first secondary carrier may be aligned with the sending time of the RS on the activated carrier in the aggregated carriers of the UE, or the sending time of the temporary RS on the first secondary carrier may not necessarily be aligned with the sending time of the RS on the activated carrier in the aggregated carriers of the UE. For example, whether the sending time of the temporary RS on the first secondary carrier is aligned with the sending time of the RS on the activated carrier in the aggregated carriers of the UE may be determined by the network device based on factors such as an actual requirement. An AGC adjustment process has hysteresis. If the sending time of the temporary RS on the first secondary carrier is not aligned with the sending time of the RS on the activated carrier in the aggregated carriers of the UE, the UE may receive the reference signals on the carriers at different time. In this case, the UE may temporarily store a first received reference signal, and then adjust the AGC based on the received reference signals after the reference signals on the carriers are received, so that adjusted AGC may also be used for the carriers of the UE that participate in aggregation. In other words, due to the hysteresis of the AGC adjustment process, actually, the sending time of the temporary RS on the first secondary carrier is not necessarily required to be aligned with the sending time of the RS on the activated carrier in the aggregated carriers of the UE. Even if sending time is not aligned, the UE can also implement AGC adjustment. If the manner 2 is used, a limitation on the network device is reduced without increasing calculation complexity of the UE, and implementation flexibility of the network device is improved.

For the manner 1 or the manner 2, *T_{activation_time}* (where in this case, *T_{activation_time}* represents the actual activation duration of the first secondary carrier) may be obtained based on second duration. However, in the manner 1 and the manner 2, definitions of the second duration are different. The following provides descriptions by using examples.

If the manner 1 is used, the second duration may be a larger value in third duration and fourth duration. The third duration is, for example, duration in which the UE waits for and obtains (or receives) a first complete temporary RS burst from the first secondary carrier The fourth duration is, for example, duration in which the UE waits for and obtains (or receives) a first complete RS burst from a second carrier. The second carrier includes, for example, an activated carrier of the UE. For example, if a quantity of activated carriers of the UE is 1, the fourth duration is duration in which the UE waits for and obtains (or receives) a first complete RS burst from the carrier For another example, if a quantity of activated carriers of the UE is greater than 1, pieces of duration in which the UE waits for and obtains first complete RS bursts on the plurality of carriers may be the same or may be different. In this case, the fourth duration is, for example, a maximum value in these pieces of duration. For example, activated carriers of the UE include a carrier 1 and a carrier 2. Duration in which the UE waits for and obtains a first complete RS burst from the carrier 1 is duration 1, duration in which the UE waits for and obtains a first complete RS burst from the carrier 2 is duration 2, and the duration 1 is less than the duration 2. In this case, the fourth duration is the duration 2.

In this case, in an optional implementation of determining *T_{activation_time}* based on the second duration, *T_{activation_time}* may meet the following relationship: ${T}_{activation _ time} = max \left\{{T}_{{first}_{TempRS}}, {T}_{first _ RS}\right\} + {T}_{TempRS} + 5$ (Formula 2)

*T_{first_TempRS}* represents the third duration, *T_{first_RS}* represents the fourth duration, max {x, y} represents taking a larger value in x and y, max {*T_{first_{TempRS}}*, *T_{first_RS}*} represents the second duration, and *T_{TempRS}* represents duration in which the UE waits for and obtains one complete temporary RS burst from the first secondary carrier It should be noted that the third duration represents the duration in which the UE waits for and obtains (or receives) the first complete temporary RS burst from the first secondary carrier, but *T_{TempRS}* represents the duration in which the UE waits for and obtains one complete temporary RS burst from the first secondary carrier. In other words, the third duration emphasizes "the first complete temporary RS burst", but *T_{TempRS}* represents "one complete temporary RS burst", and does not emphasize that the temporary RS burst is the first temporary RS burst.

In addition, the formula 2 is merely an example. For example, the value 5 in the formula 2 may alternatively be replaced with another value, or may be replaced with another function. Alternatively, in the formula 2, max{*T_{first_{TempRS}},T_{first_RS}*} + *T_{TempRS} +* 5 may be replaced with *f*(max{*T_{first_{TempRS}},T_{first_{RS}}*},*T_{TempRS}*), where *f*(x) represents a function with x as a variable, and the function may be an addition function, or may be a function in another calculation form.

If the manner 2 is used, the second duration is, for example, duration in which the UE waits for and obtains (or receives) a first complete temporary RS burst from the first secondary carrier In other words, in the manner 2, a process of receiving a reference signal on another carrier may not be considered, and the second duration may be determined based on a process in which the UE receives the temporary RS on the first secondary carrier. This enables a process of determining the second duration to be simpler.

In this case, in an optional implementation of determining *T_{activation_time}* based on the second duration, *T_{activation_time}* may meet the following relationship: ${T}_{activation _ time} = {T}_{first _ TempRS} + {T}_{TempRS} + 5$ (Formula 3)

*T_{first_TempRS}* represents the second duration. For an explanation of *T_{TempRS},* refer to descriptions of the formula 2. In addition, the formula 3 is merely an example. For example, the value 5 in the formula 3 may alternatively be replaced with another value, or may be replaced with another function. Alternatively, in the formula 3, *T_{first_TempRS} + T_{TempRS}* + 5 may be replaced with *f*(*T_{first_TempRS},T_{TempRS}*), where *f*(x) represents a function with x as a variable, and the function may be an addition function, or may be a function in another calculation form.

Manner 3: The UE sends capability information to the network device, to indicate to select the manner 1 or the manner 2 based on the capability information.

If the manner 3 is used, the UE may further send the capability information to the network device, and correspondingly, the network device may receive the capability information from the UE. The capability information may indicate that the AGC adjustment is related to a carrier other than the first secondary carrier (or the capability information may request reference signals to be sent at the same time on carriers configured for the UE), or the capability information may indicate that the AGC adjustment is irrelevant to a carrier other than the first secondary carrier (or the capability information may indicate that reference signals are not required to be sent at the same time on carriers configured for the UE). For example, the UE may send the capability information to the network device after receiving the activation command in S301, or the UE may send the capability information to the network device before receiving the activation command. Sending time of the capability information is not limited in this embodiment of this application.

After the network device receives the capability information, if the capability information indicates that the AGC adjustment is related to the carrier other than the first secondary carrier, or the capability information requests the reference signals to be sent at the same time on the carriers configured for the UE, the network device may perform processing in the foregoing manner 1. To be specific, time at which the network device sends the temporary RS on the first secondary carrier is the same as time at which the network device sends the RS on the activated carrier of the UE. However, if the capability information indicates that the AGC adjustment is irrelevant to the carrier other than the first secondary carrier, or indicates that the reference signals are not required to be sent at the same time on the carriers configured for the UE, the network device may perform processing in the foregoing manner 2. To be specific, time at which the network device sends the temporary RS on the first secondary carrier may be the same as or different from time at which the network device sends the RS on the activated carrier of the UE.

If the manner 3 is used, an AGC adjustment process of the UE is more compatible with a capability of the UE. For example, some UEs do not support the manner 2. In this case, such UE may indicate, by using capability information, that AGC adjustment is related to a carrier other than the first secondary carrier, so that the network device may perform processing in the manner 1, to avoid, as much as possible, a failure of the UE in the AGC adjustment because a process in which the network device sends a reference signal does not meet a capability requirement of the UE.

S303: The network device sends a first temporary RS on the first secondary carrier, and correspondingly, the UE receives the first temporary RS from the first secondary carrier (in other words, the UE receives the first temporary RS from the network device on the first secondary carrier).

S304: The UE performs time-frequency synchronization with the first secondary carrier based on the first temporary RS. That the UE performs time-frequency synchronization with the first secondary carrier may also be understood as that the UE performs time-frequency tracking or fine timing with the first secondary carrier, or may be understood as that the UE obtains fine timing information of the first secondary carrier.

If the UE does not need to adjust the AGC, the UE may perform S303 and S304. If the UE needs to adjust the AGC, the UE may first adjust the AGC, and then perform S303 and S304 after adjusting the AGC.

A manner in which the UE obtains the coarse timing information of the first secondary carrier has been described above. For example, the network device sends the first temporary RS on the first secondary carrier After obtaining the coarse timing information of the first secondary carrier, the UE may also correctly receive the first temporary RS from the first secondary carrier, so that the UE may perform time-frequency synchronization with the first secondary carrier by using the first temporary RS. That the UE performs time-frequency synchronization with the first secondary carrier by using the temporary RS may be considered as obtaining the fine timing information of the first secondary carrier The first temporary RS and the second temporary RS described above may be a same signal, or may be different signals.

In addition, some other steps may further need to be performed in the process of activating the first secondary carrier For the steps, refer to descriptions of the procedure shown in FIG. 1B.

In this embodiment of this application, the UE may use the temporary RS to assist in activation of the secondary carrier For example, the UE may adjust the AGC based on the temporary RS, or may perform time-frequency synchronization with the first secondary carrier based on the temporary RS. This reduces dependency of the process of activating the secondary carrier on the SSB. In this case, the process of activating the secondary carrier does not need to depend on the sending cycle of the SSB, so that the process of activating the secondary carrier is accelerated, and a delay of the process of activating the secondary carrier is reduced.

The embodiment shown in FIG. 3 describes a case in which the UE has identified the to-be-activated secondary carrier Next, FIG. 4A describes another communication method according to an embodiment of this application. In the method, UE has not identified a to-be-activated first secondary carrier (in other words, the first secondary carrier is unknown).

S401: A network device sends an activation command to the UE, and the UE receives the activation command from the network device. The activation command may indicate to activate a specific secondary carrier, for example, indicate to activate the first secondary carrier, where the first secondary carrier is one of aggregated carriers of a terminal device. In this embodiment of this application, the first secondary carrier belongs to, for example, a first frequency range, and the first frequency range is, for example, an FR 1.

For more content of S401, refer to descriptions of S301 in the embodiment shown in FIG. 3.

S402: The UE determines whether to adjust AGC of the first secondary carrier, or the UE determines a manner of adjusting AGC of the first secondary carrier (in other words, the UE determines to adjust the AGC of the first secondary carrier, and determines the manner of adjusting the AGC of the first secondary carrier).

For example, according to an indication of the network device, the UE may determine to adjust the AGC of the first secondary carrier, or determine the manner of adjusting the AGC of the first secondary carrier For example, the network device sends first indication information to the UE, and correspondingly, the UE receives the first indication information from the network device. The first indication information may indicate not to adjust the AGC of the first secondary carrier In this case, the UE determines, based on the first indication information, not to adjust the AGC of the first secondary carrier. Alternatively, the first indication information may indicate to adjust the AGC of the first secondary carrier In this case, the UE determines, based on the first indication information, to adjust the AGC of the first secondary carrier. Alternatively, the first indication information may indicate the manner of adjusting the AGC of the first secondary carrier (for example, the manner of adjusting the AGC of the first secondary carrier is adjusting the AGC of the first secondary carrier based on a temporary RS, or the manner of adjusting the AGC of the first secondary carrier is adjusting the AGC of the first secondary carrier based on an SSB). In this case, the UE may determine, based on the first indication information, the manner of adjusting the AGC of the first secondary carrier Actually, the UE implicitly determines, based on the first indication information, that the AGC of the first secondary carrier needs to be adjusted. Alternatively, the first indication information indicates to adjust the AGC of the first secondary carrier and indicates the manner of adjusting the AGC of the first secondary carrier. In this case, based on the first indication information, the UE may determine to adjust the AGC of the first secondary carrier, and determine the manner of adjusting the AGC of the first secondary carrier For example, the first indication information may be carried in the activation command in S401, or the first indication information may be sent by using a message other than the activation command.

Alternatively, the UE may autonomously determine whether to adjust the AGC of the first secondary carrier, or the UE may autonomously determine the manner of adjusting the AGC of the first secondary carrier For example, based on corresponding information, the UE may determine whether to adjust the AGC of the first secondary carrier, or determine the manner of adjusting the AGC of the first secondary carrier The following describes how the UE autonomously determines whether to adjust the AGC of the first secondary carrier, or determines the manner of adjusting the AGC of the first secondary carrier

### 1. The UE determines whether to adjust the AGC of the first secondary carrier

In an implementation in which the UE determines whether to adjust the AGC of the first secondary carrier, the UE may determine, based on a carrier aggregation manner of the UE, whether to adjust the AGC of the first secondary carrier

Optionally, if the carrier aggregation manner of the UE is an intra-band aggregation manner, the UE may further determine, with reference to transmit power of the UE on the first secondary carrier and/or transmit power of the UE on an activated carrier, whether to adjust the AGC of the first secondary carrier

For example, if a difference between the transmit power of the UE on the first secondary carrier and the transmit power of the UE on the activated carrier is less than or equal to a first threshold, it indicates that the difference between the transmit power of the UE on the first secondary carrier and the transmit power of the UE on the activated carrier is not large, and AGC on the activated carrier may also be used for the first secondary carrier. Therefore, in this case, the UE may not adjust the AGC of the first secondary carrier, to simplify a process of activating the first secondary carrier However, if the difference between the transmit power of the UE on the first secondary carrier and the transmit power of the UE on the activated carrier is greater than the first threshold, it indicates that the difference between the transmit power of the UE on the first secondary carrier and the transmit power of the UE on the activated carrier is large. If the AGC on the activated carrier is used for the first secondary carrier, the AGC on the first secondary carrier is not accurate enough. Therefore, in this case, the UE may adjust the AGC of the first secondary carrier In this manner, the AGC of the first secondary carrier may be more accurate.

However, if the carrier aggregation manner of the UE is an inter-band aggregation manner, it indicates that a difference between time at which signals on the carriers arrive at the UE is large, in other words, a difference between time at which the UE receives the signals on the carriers is large, and AGC of an activated carrier of the UE may not be used for the first secondary carrier Therefore, in this case, the UE may adjust the AGC of the first secondary carrier, so that the AGC of the first secondary carrier is more accurate.

### 2. The UE determines the manner of adjusting the AGC of the first secondary carrier

In an implementation in which the UE determines the manner of adjusting the AGC of the first secondary carrier, the UE determines, based on a carrier aggregation manner of the UE, the manner of adjusting the AGC of the first secondary carrier

Optionally, if the carrier aggregation manner of the UE is an intra-band aggregation manner, the UE may further determine, with reference to first information, the manner of adjusting the AGC of the first secondary carrier For example, the first information may include carrier aggregation information of the UE. Alternatively, the first information may include transmit power of the UE on the first secondary carrier and/or transmit power of the UE on an activated carrier, and include carrier aggregation information of the UE. The carrier aggregation information of the UE may indicate that the carriers of the UE that participate in aggregation are contiguous carriers or non-contiguous carriers.

For example, the first information includes the carrier aggregation information of the UE.

If the carriers of the UE that participate in aggregation are contiguous carriers, it indicates that a difference between time at which signals on the carriers arrive at the UE is small, in other words, a difference between time at which the UE receives the signals on the carriers is small. In this case, it can be learned from descriptions of the embodiment shown in FIG. 3 that the UE may obtain coarse timing information of the first secondary carrier based on timing information of a primary carrier and symbol-level timing information of the first secondary carrier, so that the UE can correctly receive the temporary RS on the first secondary carrier based on the coarse timing information of the first secondary carrier Therefore, in this case, the UE may adjust the AGC of the first secondary carrier based on the temporary RS on the first secondary carrier In other words, in this case, the manner of adjusting the AGC of the first secondary carrier is adjusting the AGC of the first secondary carrier based on the temporary RS. For example, the network device sends a second temporary RS on the first secondary carrier After obtaining the coarse timing information of the first secondary carrier, the UE may receive the second temporary RS from the network device on the first secondary carrier, so that the UE may adjust the AGC of the first secondary carrier based on the second temporary RS.

Alternatively, if the carriers of the UE that participate in aggregation are non-contiguous carriers, it indicates that a difference between time at which signals on the carriers arrive at the UE is large, in other words, a difference between time at which the UE receives the signals on the carriers is large. In this case, coarse timing information that is of the first secondary carrier and that is obtained by the UE based on timing information of a primary carrier and symbol-level timing information of the first secondary carrier may be not accurate enough, and the UE may not receive the temporary RS from the network device on the first secondary carrier based on the coarse timing information of the first secondary carrier Therefore, in this case, the manner of adjusting the AGC by using the temporary RS is not feasible. Therefore, in this case, the UE may adjust the AGC of the first secondary carrier based on another RS on the first secondary carrier. In other words, in this case, the manner of adjusting the AGC of the first secondary carrier is adjusting the AGC of the first secondary carrier based on the another RS. For example, the another RS includes an SSB and/or a CSI-RS. For example, the UE may blindly detect the SSB and/or the CSI-RS on the first secondary carrier, to complete adjustment on the AGC of the first secondary carrier.

For another example, the first information includes the transmit power of the UE on the first secondary carrier and/or the transmit power of the UE on the activated carrier, and includes the carrier aggregation information of the UE.

If the carriers of the UE that participate in aggregation are contiguous carriers, it indicates that a difference between time at which signals on the carriers arrive at the UE is small, in other words, a difference between time at which the UE receives the signals on the carriers is small. In this case, the UE may obtain coarse timing information of the first secondary carrier based on timing information of a primary carrier, so that the UE can correctly receive the temporary RS on the first secondary carrier based on the coarse timing information of the first secondary carrier In this case, if a difference between the transmit power of the UE on the first secondary carrier and the transmit power of the UE on the activated carrier is greater than a first threshold, the UE needs to adjust the AGC of the first secondary carrier, and the UE may adjust the AGC of the first secondary carrier based on the temporary RS on the first secondary carrier. In other words, in this case, the manner of adjusting the AGC of the first secondary carrier is adjusting the AGC of the first secondary carrier based on the temporary RS. For example, the network device sends a second temporary RS on the first secondary carrier. After obtaining the coarse timing information of the first secondary carrier, the UE may receive the second temporary RS from the network device on the first secondary carrier, so that the UE may adjust the AGC of the first secondary carrier based on the second temporary RS. Alternatively, if the carriers of the UE that participate in aggregation are contiguous carriers, but a difference between the transmit power of the UE on the first secondary carrier and the transmit power of the UE on the activated carrier is less than or equal to a first threshold, AGC on the activated carrier may also be used for the first secondary carrier, so that the UE may not need to adjust the AGC of the first secondary carrier, to simply a process of activating the secondary carrier

Alternatively, if the carriers of the UE that participate in aggregation are non-contiguous carriers, it indicates that a difference between time at which signals on the carriers arrive at the UE is large, in other words, a difference between time at which the UE receives the signals on the carriers is large. In this case, coarse timing information that is of the first secondary carrier and that is obtained by the UE based on timing information of a primary carrier may be not accurate enough, and the UE may not receive the temporary RS from the network device on the first secondary carrier based on the coarse timing information of the first secondary carrier. Therefore, in this case, if a difference between the transmit power of the UE on the first secondary carrier and the transmit power of the UE on the activated carrier is greater than a first threshold, the UE needs to adjust the AGC of the first secondary carrier, but the manner of adjusting the AGC of the first secondary carrier by using the temporary RS is not feasible. Therefore, in this case, the UE may adjust the AGC of the first secondary carrier based on another RS on the first secondary carrier In other words, in this case, the manner of adjusting theAGC of the first secondary carrier is adjusting theAGC of the first secondary carrier based on the another RS. For example, the another RS includes an SSB and/or a CSI-RS. For example, the UE may blindly detect the SSB and/or the CSI-RS on the first secondary carrier, to complete adjustment on the AGC of the first secondary carrier Alternatively, although the carriers of the UE that participate in aggregation are non-contiguous carriers, a difference between the transmit power of the UE on the first secondary carrier and the transmit power of the UE on the activated carrier is less than or equal to a first threshold. In this case, AGC on the activated carrier may also be used for the first secondary carrier, and the UE may not need to adjust the AGC of the first secondary carrier, to simply a process of activating the secondary carrier.

Alternatively, if the carriers of the UE that participate in aggregation are non-contiguous carriers, the first information may further include a timing difference between the first secondary carrier and the activated carrier of the UE in addition to the transmit power of the UE on the first secondary carrier and/or the transmit power of the UE on the activated carrier and the carrier aggregation information of the UE. For example, if the carriers of the UE that participate in aggregation are non-contiguous carriers, and a difference between the transmit power of the UE on the first secondary carrier and the transmit power of the UE on the activated carrier is greater than a first threshold, the UE needs to adjust the AGC of the first secondary carrier In this case, if a timing difference between the first secondary carrier and each activated carrier in all activated carries of the UE (namely, a difference between timing of the first secondary carrier and timing of each activated carrier in all the activated carriers of the UE) is greater than CP duration, regardless of an activated carrier whose timing information is used by the UE to obtain coarse timing information of the first secondary carrier, the obtained coarse timing information of the first secondary carrier may be not accurate enough. As a result, the temporary RS cannot be used to adjust the AGC of the first secondary carrier. Therefore, if timing differences between the first secondary carrier and all the activated carriers of the UE are greater than the CP duration, the UE may adjust the AGC of the first secondary carrier based on another RS on the first secondary carrier In other words, in this case, the manner of adjusting the AGC of the first secondary carrier is adjusting the AGC of the first secondary carrier based on the another RS. For example, the another RS includes an SSB and/or a CSI-RS. For example, the UE may blindly detect the SSB and/or the CSI-RS on the first secondary carrier, to complete adjustment on the AGC of the first secondary carrier. Alternatively, if a timing difference between the first secondary carrier and at least one activated carrier of the UE is less than or equal to CP duration, the UE may obtain coarse timing information of the first secondary carrier based on timing information of one or more activated carriers in the at least one activated carrier and symbol-level timing information of the first secondary carrier, and the UE can receive the temporary RS from the network device on the first secondary carrier based on the coarse timing information of the first secondary carrier Therefore, the UE may adjust the AGC of the first secondary carrier based on the temporary RS on the first secondary carrier. In other words, in this case, the manner of adjusting the AGC of the first secondary carrier is adjusting the AGC of the first secondary carrier based on the temporary RS. For example, the network device sends a second temporary RS on the first secondary carrier. After obtaining the coarse timing information of the first secondary carrier, the UE may receive the second temporary RS from the network device on the first secondary carrier, so that the UE may adjust the AGC of the first secondary carrier based on the second temporary RS. Through further consideration of the CP duration, the UE may have an opportunity to adjust the AGC of the first secondary carrier by using the temporary RS, to improve efficiency of activating the first secondary carrier

The foregoing describes how the UE determines the manner of adjusting the AGC of the first secondary carrier if the carrier aggregation manner of the UE is the intra-band aggregation manner. The following describes how the UE determines the manner of adjusting the AGC of the first secondary carrier if the carrier aggregation manner of the UE is an inter-band aggregation manner.

For example, if the carrier aggregation manner of the UE is the inter-band aggregation manner, it indicates that a difference between time at which signals on the carriers arrive at the UE is large, in other words, a difference between time at which the UE receives the signals on the carriers is large, so that the UE needs to adjust the AGC of the first secondary carrier. However, coarse timing information that is of the first secondary carrier and that is obtained by the UE based on timing information of a primary carrier may be not accurate enough, and the UE may not receive the temporary RS from the network device on the first secondary carrier based on the coarse timing information of the first secondary carrier Therefore, in this case, the manner in which the UE adjusts the AGC of the first secondary carrier by using the temporary RS is not feasible. Therefore, in this case, the UE may adjust the AGC of the first secondary carrier based on another RS on the first secondary carrier In other words, in this case, the manner of adjusting the AGC of the first secondary carrier is adjusting the AGC of the first secondary carrier based on the another RS. For example, the another RS includes an SSB and/or a CSI-RS. For example, the UE may blindly detect the SSB and/or the CSI-RS on the first secondary carrier, to complete adjustment on the AGC of the first secondary carrier.

Alternatively, if the carrier aggregation manner of the UE is the inter-band aggregation manner, and a timing difference between the first secondary carrier and each activated carrier in all activated carries of the UE is greater than CP duration, regardless of an activated carrier based on which the UE obtains coarse timing information of the first secondary carrier, the obtained coarse timing information of the first secondary carrier may be not accurate enough. As a result, the temporary RS cannot be used to adjust the AGC of the first secondary carrier Therefore, if timing differences between the first secondary carrier and all the activated carriers of the UE are greater than the CP duration, the UE may adjust the AGC of the first secondary carrier based on another RS on the first secondary carrier. In other words, in this case, the manner of adjusting the AGC of the first secondary carrier is adjusting the AGC of the first secondary carrier based on the another RS. For example, the another RS includes an SSB and/or a CSI-RS. For example, the UE may blindly detect the SSB and/or the CSI-RS on the first secondary carrier, to complete adjustment on the AGC of the first secondary carrier. Alternatively, if a timing difference between the first secondary carrier and at least one activated carrier of the UE is less than or equal to CP duration, the UE may obtain coarse timing information of the first secondary carrier based on timing information of one or more activated carriers in the at least one activated carrier, and the UE can receive the temporary RS from the network device on the first secondary carrier based on the coarse timing information of the first secondary carrier Therefore, the UE may adjust the AGC of the first secondary carrier based on the temporary RS on the first secondary carrier In other words, in this case, the manner of adjusting the AGC of the first secondary carrier is adjusting the AGC of the first secondary carrier based on the temporary RS. For example, the network device sends a second temporary RS on the first secondary carrier. After obtaining the coarse timing information of the first secondary carrier, the UE may receive the second temporary RS from the network device on the first secondary carrier, so that the UE may adjust the AGC of the first secondary carrier based on the second temporary RS. Through further consideration of the CP duration, the UE may have an opportunity to adjust the AGC of the first secondary carrier by using the temporary RS, to improve efficiency of activating the first secondary carrier

S403: The UE identifies the first secondary carrier.

In this embodiment of this application, the first secondary carrier is unknown, indicating that the UE has not identified the first secondary carrier Therefore, if the UE determines, in the determining process in S402, that the AGC needs to be adjusted, the UE may identify the first secondary carrier after adjusting the AGC. Alternatively, if the UE determines, in the determining process in S402, that the AGC does not need to be adjusted, the UE may identify the first secondary carrier

For example, when a to-be-activated secondary carrier is unknown, a currently specified manner of calculating *T_{activation_time}* (where *T_{activation_time}* represents actual activation duration of the to-be-activated secondary carrier) is as follows: ${T}_{{activation}_{time}} = {T}_{firstSSB _ MAX} + {T}_{SMTC _ MAX} + 2 \times {T}_{rs} + 5 ms$ (Formula 4)

*T_{firstSSB_MAX} + T_{SMTC_MAX}* represents duration for adjusting AGC based on an SSB, where two processes of adjusting the AGC based on the SSB are required. The formula 4 includes two *Tᵣₛ*, where one *Tᵣₛ* represents duration for identifying the to-be-activated secondary carrier, and the other *Tᵣₛ* represents duration for performing time-frequency synchronization between the UE and the to-be-activated secondary carrier In addition, the formula 4 is merely an example. For example, the value 5 in the formula 4 may alternatively be replaced with another value, or may be replaced with another function. Alternatively, in the formula 4, *T_{firstSSB_MAX} + T_{SMTC_MAX} +* 2 × *Tᵣₛ* + 5ms may be replaced with *f*(*T_{firstSSB_MAX},T_{SMTC_MAX},Tᵣₛ*), where *f*(x) represents a function with x as a variable, and the function may be an addition function, or may be a function in another calculation form.

If the UE adjusts the AGC based on a temporary RS, *T_{firstSSB_MAX} + T_{SMTC_MAX}* may alternatively represent duration for adjusting the AGC based on the temporary RS, where two processes of adjusting the AGC based on the temporary RS are also required. After adjusting the AGC based on the temporary RS twice, the UE may identify the first secondary carrier

Alternatively, if the UE adjusts the AGC based on another RS, where for example, the another RS is an SSB herein, after adjusting the AGC based on the SSB twice, the UE may identify the first secondary carrier

For a process in which the UE identifies the first secondary carrier, refer to descriptions of the procedure shown in FIG. 1B. After identifying the first secondary carrier, the UE obtains the symbol-level timing information of the first secondary carrier

S404: The network device sends a first temporary RS on the first secondary carrier, and correspondingly, the UE receives the first temporary RS from the first secondary carrier (in other words, the UE receives the first temporary RS from the network device on the first secondary carrier).

S405: The UE performs time-frequency synchronization with the first secondary carrier based on the first temporary RS. That the UE performs time-frequency synchronization with the first secondary carrier may also be understood as that the UE performs time-frequency tracking or fine timing with the first secondary carrier, or may be understood as that the UE obtains fine timing information of the first secondary carrier.

A manner in which the UE obtains the coarse timing information of the first secondary carrier has been described above. For example, the network device sends the first temporary RS on the first secondary carrier After obtaining the coarse timing information of the first secondary carrier, the UE may also correctly receive the first temporary RS from the first secondary carrier, so that the UE may perform time-frequency synchronization with the first secondary carrier by using the first temporary RS. The first temporary RS and the second temporary RS described above may be a same signal, or may be different signals.

It can be learned that, even if the UE does not adjust the AGC, or the UE adjusts the AGC based on another RS, the UE may still perform time-frequency synchronization with the first secondary carrier based on the temporary RS. In this way, an activation delay of the secondary carrier can also be reduced to some extent. In this case, if the UE adjusts the AGC based on the another RS, when the network device needs to send the temporary RS (for example, the first temporary RS) for the UE to perform time-frequency synchronization is a problem that needs to be discussed. If the network device sends the temporary RS too early, even if the UE receives the temporary RS, the UE cannot perform time-frequency synchronization in time. As a result, the temporary RS is redundant information for the UE, and transmission resources are wasted. If the network device sends the temporary RS too late, the UE cannot perform time-frequency synchronization in time. As a result, the activation delay of the first secondary carrier is increased. Therefore, if the UE adjusts the AGC based on the another RS, for when the network device needs to send the temporary RS for the UE to perform time-frequency synchronization, this embodiment of this application proposes that the network device may send the temporary RS to the UE when a first condition is met. The first condition has different implementations, and the following provides descriptions by using examples.

### 1. First implementation of the first condition

The first condition is starting from completion of sending of the activation command to an end of a third SSB measurement timing configuration (SSB measurement timing configuration, SMTC) cycle.

For example, the network device may estimate, based on worst time for an AGC adjustment process and identification on the secondary carrier, time for the UE to complete AGC adjustment and the identification on the first secondary carrier, and then trigger sending of the temporary RS. For example, the network device considers that the UE completes the AGC adjustment and the identification on the first secondary carrier after three SMTC cycles starting from the sending of the activation command in S401. Therefore, the network device may send the temporary RS, for example, send the first temporary RS, from the completion of the sending of the activation command to the end of the third SMTC cycle. In this case, activation time of the first secondary carrier may meet the following relationship: ${T}_{activation} = {T}_{firstSSB _ MAX} + {T}_{SMTC _ MAX} + {T}_{rs} + {T}_{f irst _ TempRS} + 5 ms$ (Formula 5)

*T_{firstSSB_MAX} + T_{SMTC_MAX}* represents duration for adjusting the AGC based on another RS (for example, an SSB), *Tᵣₛ* represents duration for identifying the to-be-activated secondary carrier, *T_{first_TempRS}* represents duration in which the UE waits for and obtains (or receives) a first complete temporary RS burst from the first secondary carrier In addition, the formula 5 is merely an example. For example, the value 5 in the formula 5 may alternatively be replaced with another value, or may be replaced with another function. Alternatively, in the formula 5, *T_{firstSSB_MAX} + T_{SMTC_MAX} + Tᵣₛ + T_{first_TempRS}* + 5ms may be replaced with *f*(*T*_{*firstSSB*_}*_{MAX},T_{SMTC_MAX},Tᵣₛ,T_{first_TempRS}*), where *f*(x) represents a function with x as a variable, and the function may be an addition function, or may be a function in another calculation form.

In addition, after completing the time-frequency synchronization with the first secondary carrier, the UE measures the first secondary carrier to obtain CSI or a CQI, and the UE sends the CSI or the CQI to the network device. In this case, if the network device receives the CSI or the CQI from the UE, it indicates that the UE has completed the time-frequency synchronization with the first secondary carrier Therefore, if the network device receives the CSI or the CQI from the UE, the network device may stop sending the first temporary RS, to save signaling overheads.

In the first implementation of the first condition, sufficient time can be reserved for the AGC adjustment process of the UE and the process of identifying the first secondary carrier

### 2. Second implementation of the first condition

The first condition is starting from completion of sending of the activation command to an end of a first SMTC cycle.

In some cases, an AGC adjustment process of the UE and the process of identifying the first secondary carrier may not need three SMTC cycles, for example, may be completed in only one SMTC cycle. Therefore, to reduce the activation delay of the secondary carrier, in the second implementation of the first condition, the network device reserves short time for the AGC adjustment process of the UE and the process of identifying the first secondary carrier After the AGC adjustment process and the process of identifying the first secondary carrier are completed, the UE may receive the temporary RS from the network device in time, to perform time-frequency synchronization with the first secondary carrier in time.

For example, in the second implementation of the first condition, when the first condition is met, the network device may continuously send the temporary RS (for example, the first temporary RS). After completing the time-frequency synchronization with the first secondary carrier, the UE measures the first secondary carrier to obtain CSI or a CQI, and the UE sends the CSI or the CQI to the network device. In this case, if the network device receives the CSI or the CQI from the UE, it indicates that the UE has completed the time-frequency synchronization with the first secondary carrier Therefore, if the network device receives the CSI or the CQI from the UE, the network device may stop sending the first temporary RS, to save signaling overheads.

In the second implementation of the first condition, the UE can perform time-frequency synchronization with the first secondary carrier as soon as possible, and the activation delay of the first secondary carrier can be reduced.

### 3. Third implementation of the first condition

The first condition is that the network device receives second indication information from the UE, where the second indication information may indicate that identification on the first secondary carrier has been completed.

After completing the identification on the first secondary carrier, the UE may send the second indication information to the network device. After receiving the second indication information, the network device may send the temporary RS (for example, the first temporary RS), so that the UE performs time-frequency synchronization with the first secondary carrier

For example, the second indication information may be implemented by using an SSB index (index). Both an AGC adjustment process of the UE and the process of identifying the first secondary carrier may be completed based on another RS from the network device. The another RS is, for example, an SSB. In this case, the UE sends an index of the SSB to the network device, indicating that the UE has identified the SSB sent by the network device. Therefore, the network device can determine that the UE has completed the identification on the first secondary carrier.

For another example, the second indication information may be implemented by using an SR. The SR is originally used by the UE to request a resource from the network device. However, that the UE notifies the network device that the identification on the first secondary carrier has been completed is actually to trigger the network device to send the temporary RS for the UE to perform time-frequency synchronization with the first secondary carrier Therefore, the second indication information may also be considered as implicitly requesting a resource. In this case, when the SR is used as the second indication information, the SR is reused without departing from an original function of the SR.

Alternatively, the second indication information may be implemented by using other existing information. The existing information is used as the second indication information without introducing new information, so that the technical solution in this embodiment of this application is more compatible with an existing protocol. Alternatively, the second indication information may be newly introduced information, for example, information dedicated to indicating that the UE has completed the identification on the to-be-activated secondary carrier. The newly introduced information is used as the second indication information, so that the second indication information is clearer.

Similarly, after completing the time-frequency synchronization with the first secondary carrier, the UE measures the first secondary carrier to obtain CSI or a CQI, and the UE sends the CSI or the CQI to the network device. In this case, if the network device receives the CSI or the CQI from the UE, it indicates that the UE has completed the time-frequency synchronization with the first secondary carrier Therefore, if the network device receives the CSI or the CQI from the UE, the network device may stop sending the first temporary RS, to save signaling overheads.

In addition, some other steps may further need to be performed in the process of activating the first secondary carrier For the steps, refer to descriptions of the procedure shown in FIG. 1B.

In this embodiment of this application, the UE may use the temporary RS to assist in activation of the secondary carrier For example, the UE may adjust the AGC based on the temporary RS, or may perform time-frequency synchronization with the first secondary carrier based on the temporary RS. This reduces dependency of the process of activating the secondary carrier on the SSB. In this case, the process of activating the secondary carrier does not need to depend on a sending cycle of the SSB, so that the process of activating the secondary carrier is accelerated, and a delay of the process of activating the secondary carrier is reduced. In addition, when the UE cannot activate the secondary carrier based on the temporary RS, the UE may still continue to activate the secondary carrier based on a reference signal, for example, the SSB, to provide more options for activating the secondary carrier, and improve a success rate of activating the secondary carrier.

To better understand an advantage of using the temporary reference signal provided in this embodiment of this application in the process of activating the secondary carrier, the following describes, by using several examples, a difference between activating the secondary carrier by using the temporary reference signal and activating the secondary carrier by using the SSB. In the following several examples, an example in which a frequency of a to-be-activated secondary carrier belongs to an FR 1 is used.

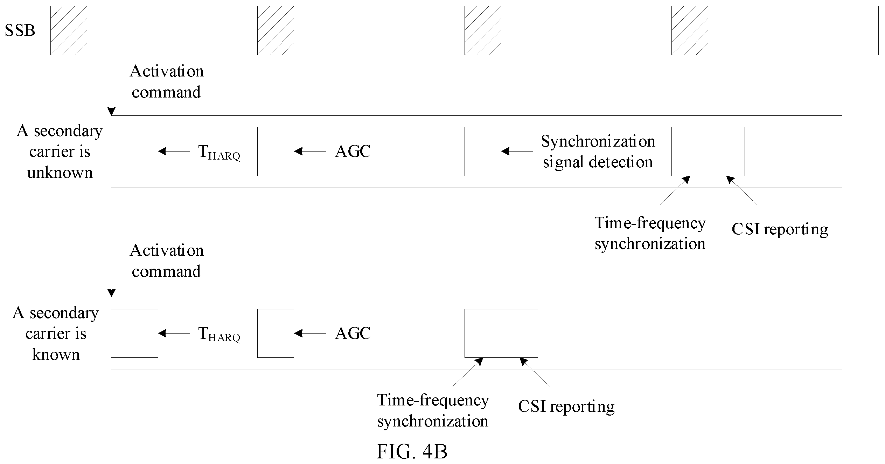

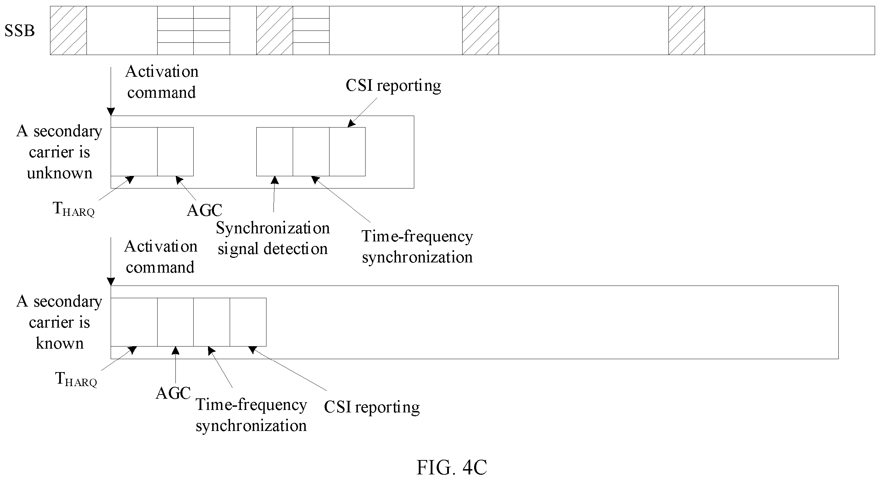

Refer to FIG. 4B and FIG. 4C. FIG. 4B is a schematic diagram of activating a secondary carrier by using an SSB, and FIG. 4C is a schematic diagram of activating a secondary carrier by using a temporary reference signal according to an embodiment of this application. In the first row in FIG. 4B or FIG. 4C, a box with slashes represents sending time of an SSB, and a blank box represents time at which an SSB is not sent. Therefore, a sending cycle of the SSB can also be learned. The second row and the third row in FIG. 4B or FIG. 4C represent time relationships relative to the first row. For example, AGC in the second row in FIG. 4C represents a correspondence between time of an AGC function and time of the SSB in the first row. In the first row in FIG. 4C, a box with horizontal lines represents sending time of a temporary reference signal. In FIG. 4C, an example in which the temporary reference signal is an aperiodic signal is used. If a network device indicates UE to activate a specific secondary carrier, the network device may send an activation command to the UE. After receiving the activation command, the UE may enter a procedure of activating the secondary carrier For example, the UE processes the activation command. After completing processing of the activation command, the UE may adjust AGC. After completing AGC adjustment, the UE may detect a synchronization signal to identify the secondary carrier. Then, the UE may perform time-frequency synchronization with the secondary carrier After completing the time-frequency synchronization, the UE may measure the secondary carrier to obtain CSI (or a CQI), and send the CSI (or the CQI) to the network device, to complete the procedure of activating the secondary carrier. Certainly, the procedure of activating the secondary carrier may further include some other steps. For details, refer to the foregoing descriptions. In FIG. 4B or FIG. 4C, an arrow represents time at which the network device sends an activation command. If a transmission delay of the activation command is ignored, the arrow also represents time at which the UE receives the activation command. T_{HARQ} represents duration required by the UE to receive and process the activation command. AGC represents time at which the UE performs AGC adjustment. Synchronization signal detection represents time at which the UE detects a synchronization signal. The synchronization signal includes, for example, a PSS/SSS. If the to-be-activated secondary carrier is known, the synchronization signal detection does not need to be performed. Time-frequency synchronization represents time at which the UE performs time-frequency synchronization described in the foregoing embodiment, and the time-frequency synchronization may also be represented as time-frequency tracking or fine timing. CSI reporting represents time at which the UE sends CSI to the network device. Alternatively, the UE may send a CQI to the network device. In FIG. 4B and FIG. 4C, the CSI is used as an example.

In FIG. 4B, when the secondary carrier is unknown or known, the AGC is aligned with sending time of a second SSB, indicating that the UE may perform AGC based on the SSB received within the sending time of the second SSB. When the secondary carrier is unknown, the synchronization signal detection is aligned with sending time of a third SSB, indicating that the UE may detect a PSS/SSS received within the sending time of the third SSB; when the secondary carrier is known, there is no synchronization signal detection process. When the secondary carrier is unknown, a time-frequency synchronization process is aligned with sending time of a fourth SSB, indicating that the UE may perform time-frequency synchronization with the secondary carrier based on the SSB received within the sending time of the fourth SSB; when the secondary carrier is known, a time-frequency synchronization process is aligned with sending time of a third SSB, indicating that the UE may perform time-frequency synchronization with the secondary carrier based on the SSB received within the sending time of the third SSB. It can be learned that, when the SSB is used to activate the secondary carrier, the UE needs to receive the SSB based on the sending cycle of the SSB, to perform AGC adjustment, PSS/SSS detection, time-frequency synchronization, and the like based on the SSB. The sending cycle of the SSB is large. As a result, an activation delay of the secondary carrier is also high. The sending time of the second SSB is time represented by a second block with slashes from left to right in FIG. 4B, the sending time of the third SSB is time represented by a third block with slashes from left to right in FIG. 4B, and the sending time of the fourth SSB is time represented by a fourth block with slashes from left to right in FIG. 4B.

In FIG. 4C, when the secondary carrier is unknown or known, the AGC is aligned with sending time of a first temporary reference signal, indicating that the UE may perform AGC based on the temporary reference signal received within the sending time of the first temporary reference signal. When the secondary carrier is unknown, the synchronization signal detection is aligned with sending time of a second SSB, indicating that the UE may detect a PSS/SSS received within the sending time of the second SSB; when the secondary carrier is known, there is no synchronization signal detection process. When the secondary carrier is unknown, the network device may not send a second temporary reference signal shown in FIG. 4C, but send a third temporary reference signal shown in FIG. 4C, where a time-frequency synchronization process is aligned with sending time of the third temporary reference signal, indicating that the UE may perform time-frequency synchronization with the secondary carrier based on the temporary reference signal received within the sending time of the third temporary reference signal; when the secondary carrier is known, the network device may send a second temporary reference signal shown in FIG. 4C, and a third temporary reference signal shown in FIG. 4C may be sent or may not be sent, where a time-frequency synchronization process is aligned with sending time of the second temporary reference signal, indicating that the UE may perform time-frequency synchronization with the secondary carrier based on the temporary reference signal received within the sending time of the second temporary reference signal. It should be noted that, if the temporary reference signal is used to activate the secondary carrier, and the secondary carrier is known, the network device may continue to send the SSB, or may not send the SSB. A reason why the SSB is still drawn in FIG. 4C is to better compare with a manner of activating the secondary carrier by using the SSB.

It can be learned that the temporary reference signal does not need to be sent periodically, and the network device may send the temporary reference signal when the UE has a requirement. In this case, the UE may quickly performAGC adjustment, time-frequency synchronization, and the like, so that an activation delay of the secondary carrier is clearly reduced. The temporary reference signal is an aperiodic signal, and sending time does not need to be periodically reserved for the temporary reference signal. Therefore, the "sending time of the temporary reference signal" may also be replaced with "temporary reference signal". In addition, the sending time of the first temporary reference signal is time represented by a first block with horizontal lines from left to right in FIG. 4C, the sending time of the second temporary reference signal is time represented by a second block with horizontal lines from left to right in FIG. 4C, and the sending time of the third temporary reference signal refers to time represented by a third block with horizontal lines from left to right in FIG. 4C.

In addition, it should be noted that, in FIG. 4C, the network device sends the temporary reference signal when T_{HARQ} of the UE ends, in other words, end time of T_{HARQ} is aligned with start time of sending the first temporary reference signal by the network device. However, this is merely an example. Actually, the network device may alternatively send the temporary reference signal a period of time after T_{HARQ} of the UE ends. In this case, the end time of T_{HARQ} of the UE may be earlier than the sending time of the first temporary reference signal in FIG. 4C. In addition, in FIG. 4C, the UE starts the AGC adjustment after receiving the temporary reference signal, in other words, start time of the AGC adjustment of the UE is aligned with the start time of sending the first temporary reference signal by the network device. This is merely an example. It is also possible that the UE starts the AGC adjustment a period of time after the network device sends the temporary reference signal, in other words, the UE may need specific reaction time (or referred to as processing time). In this case, the start time of sending the first temporary reference signal by the network device is earlier than the start time of the AGC adjustment of the UE. Similarly, in FIG. 4C, a case in which the secondary carrier is known is used as an example. The UE starts to perform time-frequency synchronization after receiving the temporary reference signal, in other words, start time of the time-frequency synchronization of the UE is aligned with start time of sending the second temporary reference signal by the network device. This is merely an example. It is also possible that the UE starts to perform time-frequency synchronization a period of time after the network device sends the temporary reference signal, in other words, the UE may need specific reaction time (or referred to as processing time). In this case, the start time of sending the second temporary reference signal by the network device is earlier than the start time of the time-frequency synchronization of the UE. In addition, in FIG. 4C, the first temporary reference signal and the second temporary reference signal are adjacent in time domain, in other words, the network device continuously sends the first temporary reference signal and the second temporary reference signal. This is also merely an example. It is also possible that the network device sends the second temporary reference signal a period of time after sending the first temporary reference signal. In addition, in FIG. 4C, the UE sends the CSI to the network device after completing the time-frequency synchronization. In practice, the UE may send the CSI to the network device a period of time after completing the time-frequency synchronization, in other words, the UE may have specific processing time.

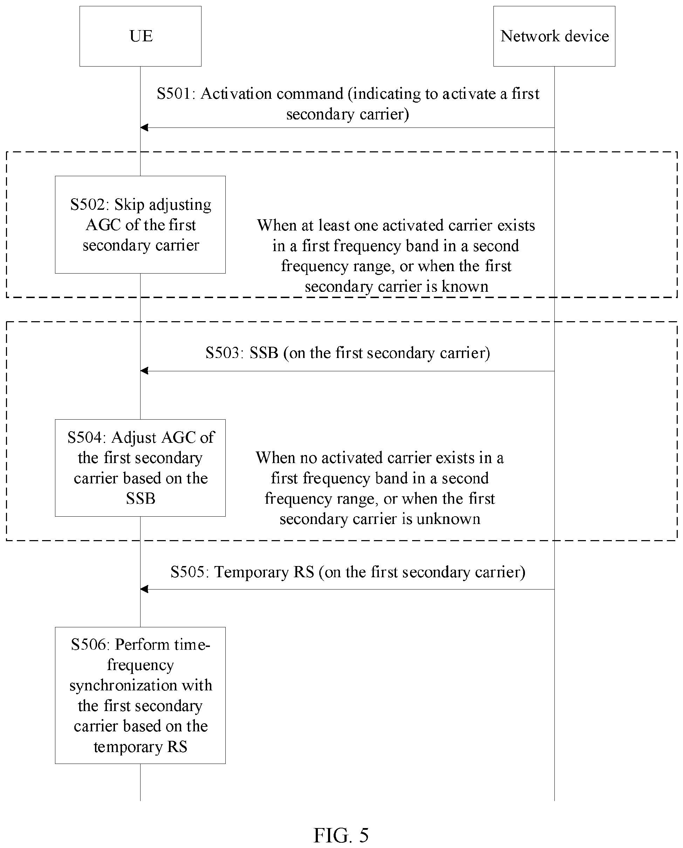

In the embodiment shown in FIG. 3 or the embodiment shown in FIG. 4A, the to-be-activated secondary carrier (for example, the first secondary carrier) belongs to the FR 1. FIG. 5 describes still another communication method according to an embodiment of this application. In the method, a to-be-activated first secondary carrier belongs to a second frequency range, and the second frequency range is, for example, an FR 2.

S501: A network device sends an activation command to UE, and the UE receives the activation command from the network device. The activation command may indicate to activate a specific secondary carrier, for example, indicate to activate the first secondary carrier, where the first secondary carrier is one of aggregated carriers of a terminal device. In this embodiment of this application, the first secondary carrier belongs to, for example, the second frequency range, and the second frequency range is, for example, the FR 2.

For more content of S501, refer to descriptions of S301 in the embodiment shown in FIG. 3.

S502: When at least one activated carrier exists in a first frequency band in the second frequency range, or when the UE has identified the first secondary carrier (in other words, the first secondary carrier is known), skip adjusting AGC of the first secondary carrier. Then, S505 is performed.

S502 may be understood as follows: If at least one activated carrier exists in the first frequency band in the second frequency range, the UE may not adjust the AGC of the first secondary carrier, if the UE has identified the first secondary carrier, the UE may not adjust the AGC of the first secondary carrier regardless of whether an activated carrier exists in the first frequency band in the second frequency range. The first frequency band is a frequency band on which the first secondary carrier is located.

For example, the second frequency range is the FR 2, and a frequency difference between carriers in the FR 2 is small. If at least one activated carrier exists in the first frequency band in the second frequency range, AGC of the activated carrier may be used as the AGC of the first secondary carrier. Therefore, in this case, the UE does not need to adjust the AGC of the first secondary carrier In addition, in this case, the UE may also consider that the first secondary carrier is known, and does not need to identify the first secondary carrier

However, if the first secondary carrier is known, the UE does not need to adjust the AGC of the first secondary carrier, and does not need to identify the first secondary carrier.

S503: When there is no activated carrier in a first frequency band in the second frequency range, and the UE has not identified the first secondary carrier (in other words, the first secondary carrier is unknown), receive another RS from the first secondary carrier (in other words, receive the another RS from the network device on the first secondary carrier). For example, the network device sends the another RS on the first secondary carrier. If there is no activated carrier in the first frequency band in the second frequency range, and the UE has not identified the first secondary carrier, the UE receives the another RS from the network device on the first secondary carrier. For example, the another RS includes an SSB and/or a CSI-RS. In FIG. 5, the SSB is used as an example.

S504: The UE adjusts AGC of the first secondary carrier based on the another RS. In FIG. 5, an example in which the UE adjusts the AGC of the first secondary carrier based on the SSB is used. Then, S505 is performed.

After receiving the another RS from the network device on the first secondary carrier, the UE may adjust the AGC of the first secondary carrier based on the another RS.

In the FR 2, the UE needs to perform receive beam sweeping regardless of whether the UE performsAGC adjustment or carrier identification. If the UE needs to adjust the AGC or identify the first secondary carrier in the FR 2 based on a temporary RS, the network device sends temporary RSs on a plurality of downlink transmit beams. The UE separately receives the temporary RSs for the downlink transmit beams of the network device by using uplink receive beams of the UE, and then measures the temporary RSs received by using the uplink receive beams, to obtain an optimal uplink receive beam, so that the UE may receive a signal from the first secondary carrier based on the optimal uplink receive beam. If the temporary RS is implemented by using a TRS, bandwidth of the TRS is large. If receive beam sweeping is performed based on the TRS, the network device sends dozens of TRS patterns, and it is roughly estimated that the TRS needs to continuously occupy a plurality of slots. Because the bandwidth of the TRS is large, overheads of continuously sending TRS with large bandwidth are large for the network device. Therefore, the temporary RS is not applicable to AGC adjustment in a scenario of an FR2 unknown secondary cell (FR2 unknown SCell). Therefore, if there is no activated carrier in the first frequency band in the second frequency range, and the UE has not identified the first secondary carrier, the UE may perform AGC adjustment based on the another RS, to reduce overheads of the network device.

Certainly, in this case, the UE may further identify the first secondary carrier based on the another RS. For example, after performing AGC adjustment, the UE may complete identification on the first secondary carrier For a process in which the UE identifies the first secondary carrier, refer to descriptions of the procedure shown in FIG. 1B.

Step S502 and steps S503 and S504 are two parallel solutions, and one of the two solutions is selected based on a situation for execution.

S505: The network device sends a temporary RS on the first secondary carrier, and correspondingly, the UE receives the temporary RS from the first secondary carrier (in other words, the UE receives the temporary RS from the network device on the first secondary carrier).

S506: The UE performs time-frequency synchronization with the first secondary carrier based on the temporary RS. That the UE performs time-frequency synchronization with the first secondary carrier may also be understood as that the UE performs time-frequency tracking or fine timing with the first secondary carrier, or may be understood as that the UE obtains fine timing information of the first secondary carrier.

A manner in which the UE obtains coarse timing information of the first secondary carrier has been described in the embodiment shown in FIG. 3. If S502 is performed, the UE may obtain the coarse timing information of the first secondary carrier In this case, for example, the network device sends the temporary RS on the first secondary carrier. After obtaining the coarse timing information of the first secondary carrier, the UE may also correctly receive the temporary RS from the first secondary carrier, so that the UE may perform time-frequency synchronization with the first secondary carrier by using the temporary RS.

If S503 and S504 are performed, because the UE has completed the identification on the first secondary carrier, the UE may obtain the coarse timing information of the first secondary carrier In this case, for example, the network device sends the temporary RS on the first secondary carrier After obtaining the coarse timing information of the first secondary carrier, the UE may also correctly receive the temporary RS from the first secondary carrier, so that the UE may perform time-frequency synchronization with the first secondary carrier (in other words, obtain the fine timing information of the first secondary carrier) by using the temporary RS.

In addition, some other steps may further need to be performed in a process of activating the first secondary carrier. For the steps, refer to descriptions of the procedure shown in FIG. 1B.

It can be learned that, in this embodiment of this application, even if the UE does not adjust the AGC, or the UE adjusts the AGC based on the another RS, the UE may still perform time-frequency synchronization with the first secondary carrier based on the temporary RS. In this way, an activation delay of the secondary carrier can also be reduced to some extent.

In addition, embodiments of this application analyze in detail feasibility of adjusting the AGC and implementing fine timing by using the temporary RS in different scenarios, standardize behavior of the UE and configuration of the network device, and achieve common cognition between the UE and the network device.

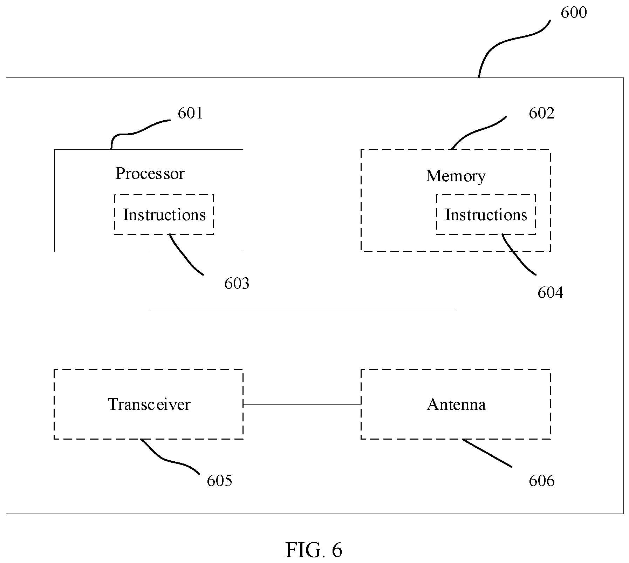

FIG. 6 is a schematic diagram of a structure of a communication apparatus according to an embodiment of this application. The communication apparatus 600 may be the terminal device or a circuit system of the terminal device in any one of the embodiment shown in FIG. 3, the embodiment shown in FIG. 4A, or the embodiment shown in FIG. 5, and is configured to implement the methods corresponding to the terminal device in the foregoing method embodiments. The communication apparatus may alternatively be the network device or a circuit system of the network device in any one of the embodiment shown in FIG. 3, the embodiment shown in FIG. 4A, or the embodiment shown in FIG. 5, and is configured to implement the methods corresponding to the network device in the foregoing method embodiments. For a specific function, refer to descriptions in the method embodiments. For example, the circuit system is a chip system.

The communication apparatus 600 includes one or more processors 601. The processor 601 may also be referred to as a processing unit, and may implement a specific control function. The processor 601 may be a general-purpose processor, a dedicated processor, or the like. For example, the processor includes a baseband processor and a central processing unit. The baseband processor may be configured to process a communication protocol and communication data. The central processing unit may be configured to control the communication apparatus 600, execute a software program, and/or process data. Different processors may be independent components, or may be disposed in one or more processing circuits, for example, integrated into one or more application-specific integrated circuits.

Optionally, the communication apparatus 600 includes one or more memories 602, configured to store instructions 604. The instructions 604 may be run on the processor, to enable the communication apparatus 600 to perform the method described in the method embodiments. Optionally, the memory 602 may further store data. The processor and the memory may be separately disposed, or may be integrated together.

Optionally, the communication apparatus 600 may include instructions 603 (sometimes may also be referred to as code or a program). The instructions 603 may be run on the processor, to enable the communication apparatus 600 to perform the method described in the embodiments. The processor 601 may store data.

Optionally, the communication apparatus 600 may further include a transceiver 605 and an antenna 606. The transceiver 605 may be referred to as a transceiver unit, a transceiver machine, a transceiver circuit, a transceiver, an input/output interface, or the like, and is configured to implement receiving and sending functions of the communication apparatus 600 through the antenna 606.

Optionally, the communication apparatus 600 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 600 may include more or fewer components, or some components are integrated, or some components are split. These components may be implemented by hardware, software, or a combination of software and hardware.

The processor 601 and the transceiver 605 described in this embodiment of this application may be implemented on an integrated circuit (integrated circuit, IC), an analog IC, a radio frequency integrated circuit (radio frequency identification, RFID), a hybrid signal IC, an application-specific integrated circuit (application-specific integrated circuit, ASIC), a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions of the terminal device and the network device. Details are not described herein again.

An embodiment of this application provides a terminal device. The terminal device (referred to as UE for ease of description) may be used in the foregoing embodiments. The terminal device includes a corresponding means (means), unit, and/or circuit for implementing a function of the UE in any one of the embodiment shown in FIG. 3, the embodiment shown in FIG. 4A, or the embodiment shown in FIG. 5. For example, the terminal device includes a transceiver module that is configured to support the terminal device in implementing receiving and sending functions, and a processing module that is configured to support the terminal device in processing a signal.

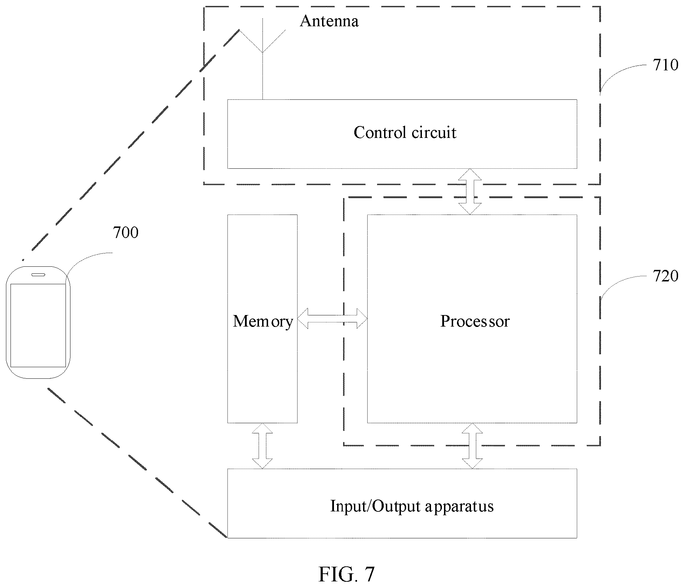

FIG. 7 is a schematic diagram of a structure of a terminal device according to an embodiment of this application.

The terminal device 700 may be used in an architecture shown in any one of FIG. 1A and FIG. 2A to FIG. 2C. For ease of description, FIG. 7 shows only main components of the terminal device 700. As shown in FIG. 7, the terminal device 700 includes a processor, a memory, a control circuit, an antenna, and an input/output apparatus. The processor is mainly configured to: process a communication protocol and communication data, control the entire terminal device 700, execute a software program, and process data of the software program. The memory is mainly configured to store the software program and data. The control circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, a microphone, or a keyboard, is mainly configured to receive data input by a user and output data to the user.

A person skilled in the art may understand that, for ease of description, FIG. 7 shows only one memory and one processor. In some embodiments, the terminal device 700 may include a plurality of processors and memories. The memory may also be referred to as a storage medium, a storage device, or the like. This is not limited in this embodiment of this application.

In an example, the antenna and the control circuit that have receiving and sending functions may be considered as a transceiver unit 710 of the terminal device 700, and the processor having a processing function may be considered as a processing unit 720 of the terminal device 700. As shown in FIG. 7, the terminal device 700 includes the transceiver unit 710 and the processing unit 720. The transceiver unit may also be referred to as a transceiver, a transceiver machine, a transceiver apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. For example, the receiving unit may also be referred to as a receiver, a receive machine, or a receiving circuit, and the sending unit may also be referred to as a transmitter, a transmit machine, or a transmitting circuit.

An embodiment of this application further provides a network device. The network device may be used in the foregoing embodiments. The network device includes a means (means), unit, and/or circuit for implementing a function of the network device in any one of the embodiment shown in FIG. 3, the embodiment shown in FIG. 4A, or the embodiment shown in FIG. 5. For example, the network device includes a transceiver module that is configured to support the network device in implementing receiving and sending functions, and a processing module that is configured to support the network device in processing a signal.

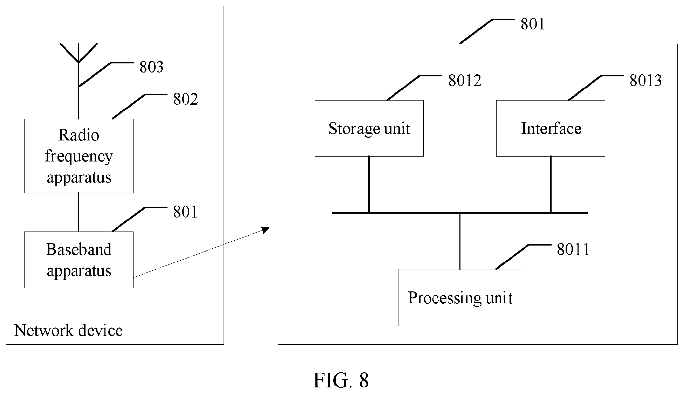

FIG. 8 is a schematic diagram of a structure of a network device according to an embodiment of this application. As shown in FIG. 8, the network device may be used in an architecture shown in any one of FIG. 1A and FIG. 2A to FIG. 2C. The network device includes a baseband apparatus 801, a radio frequency apparatus 802, and an antenna 803. In an uplink direction, the radio frequency apparatus 802 receives, through the antenna 803, information sent by a terminal device, and sends, to the baseband apparatus 801 for processing, the information sent by the terminal device. In a downlink direction, the baseband apparatus 801 processes the information of the terminal device, and sends processed information to the radio frequency apparatus 802. The radio frequency apparatus 802 processes the information of the terminal device, and then sends processed information to the terminal device through the antenna 803.

The baseband apparatus 801 includes one or more processing units 8011, a storage unit 8012, and an interface 8013. The processing unit 8011 is configured to support the network device in performing a function of the network device in the method embodiments. The storage unit 8012 is configured to store a software program and/or data. The interface 8013 is configured to exchange information with the radio frequency apparatus 802. The interface includes an interface circuit, configured to input and output information. In an implementation, the processing unit is an integrated circuit, for example, one or moreASICs, one or more digital signal processors (digital signal processors, DSPs), one or more field programmable gate arrays (field programmable gate arrays, FPGAs), or a combination of these types of integrated circuits. The storage unit 8012 and the processing unit 8011 may be located in a same circuit, that is, an on-chip storage element. Alternatively, the storage unit 8012 and the processing unit 8011 may be located in different circuits, that is, an off-chip storage element. The storage unit 8012 may be one memory, or may be a general term of a plurality of memories or storage elements.

The network device may implement some or all of the steps in the method embodiments by using one or more processing units to schedule a program. For example, a corresponding function of the network device in any one of the embodiment shown in FIG. 3, the embodiment shown in FIG. 4A, or the embodiment shown in FIG. 5 is implemented. The one or more processing units may support radio access technologies of a same standard, or may support radio access technologies of different standards.

When several embodiments provided in this application are implemented in a form of a software functional unit and sold or used as an independent product, the embodiments may be stored in a computer-readable storage medium. The computer software product is stored in a storage medium and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. By way of example, and not limitation, the computer-readable medium may include a random access memory (random access memory, RAM), a read-only memory (read-only memory, ROM), or any other medium that can be used to carry or store expected program code in an instruction form or a data structure form and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving (S301) an activation command from a network device, wherein the activation command indicates to activate a first secondary carrier, and the first secondary carrier is one of secondary carriers of a terminal device;
when the first secondary carrier is known, determining (S302), based on a measurement cycle, MC, of the terminal device for the first secondary carrier, whether to adjust automatic gain control, AGC, of the first secondary carrier, wherein a temporary reference signal is used to adjust the AGC of the first secondary carrier,
receiving (S303) a first temporary reference signal from the first secondary carrier, and
performing (S304) time-frequency synchronization with the first secondary carrier based on the first temporary reference signal
**characterized in that**:
the determining, based on a measurement cycle of the terminal device for the first secondary carrier, whether to adjust AGC of the first secondary carrier comprises:
skipping adjusting the AGC of the first secondary carrier when the measurement cycle of the terminal device for the first secondary carrier is less than or equal to a first measurement cycle.

2. The method according to claim 1, wherein activation duration of the first secondary carrier is obtained based on first duration, and the first duration is duration in which the terminal device waits for and obtains a first complete temporary reference signal burst from the first secondary carrier

3. The method according to claim 2, wherein the activation duration of the first secondary carrier meets the following relationship: ${T}_{activation _ time} = {T}_{first _ TempRS} + 5 ms ,$ wherein
*T_{activation_time}* represents the activation duration of the first secondary carrier, and *T_{first_TempRS}* represents the first duration.

4. The method according to claim 1, wherein the determining, based on a measurement cycle of the terminal device for the first secondary carrier, whether to adjust AGC of the first secondary carrier comprises:
receiving a second temporary reference signal from the first secondary carrier when the measurement cycle of the terminal device for the first secondary carrier is greater than a first measurement cycle; and
adjusting the AGC of the first secondary carrier based on the second temporary reference signal.

5. The method according to claim 4, wherein when a carrier aggregation manner of the terminal device is intra-band carrier aggregation, activation duration of the first secondary carrier is obtained based on second duration; and
the second duration is duration in which the terminal device waits for and obtains a first complete temporary reference signal burst from the first secondary carrier, or the second duration is a larger value in third duration and fourth duration, wherein the third duration is duration in which the terminal device waits for and obtains a first complete temporary reference signal burst from the first secondary carrier, the fourth duration is duration in which the terminal device waits for and obtains a first complete reference signal burst from a second carrier, and the second carrier comprises an activated carrier of the terminal device.

6. The method according to claim 5, wherein when the second duration is the duration in which the terminal device waits for and obtains the first complete temporary reference signal burst from the first secondary carrier, the activation duration of the first secondary carrier meets the following relationship: ${T}_{activation _ time} = {T}_{first _ TempRS} + {T}_{TempRS} + 5 ms ,$ wherein
*T_{activation_time}* represents the activation duration of the first secondary carrier, *T_{first_TempRS}* represents the second duration, and *T_{TempRS}* represents duration in which the terminal device waits for and obtains one complete temporary reference signal burst from the first secondary carrier.

7. A communication method, comprising:
receiving (S401) an activation command from a network device, wherein the activation command indicates to activate a first secondary carrier, and the first secondary carrier is one of secondary carriers of a terminal device;
when the first secondary carrier is unknown, determining (S402), based on a carrier aggregation manner of the terminal device, whether to adjust AGC of the first secondary carrier; or when the first secondary carrier is unknown, receiving first indication information from the network device, wherein the first indication information indicates not to adjust AGC of the first secondary carrier, or indicates a manner of adjusting AGC of the first secondary carrier;
receiving (S404) a first temporary reference signal from the first secondary carrier; and
performing (S405) time-frequency synchronization with the first secondary carrier based on the first temporary reference signal
**characterized in that**:
the determining, based on a carrier aggregation manner of the terminal device, whether to adjust AGC of the first secondary carrier comprises:
when the carrier aggregation manner of the terminal device is intra-band carrier aggregation, if a difference between transmit power of the first secondary carrier and transmit power of an activated carrier of the terminal device is less than or equal to a first threshold, skipping adjusting the AGC of the first secondary carrier

8. The method according to claim 7, wherein the determining, based on a carrier aggregation manner of the terminal device, whether to adjust AGC of the first secondary carrier comprises:
when the carrier aggregation manner of the terminal device is intra-band carrier aggregation, if a difference between transmit power of the first secondary carrier and transmit power of an activated carrier of the terminal device is greater than a first threshold, and carriers of the terminal device that participate in aggregation are contiguous carriers, receiving a second temporary reference signal from the first secondary carrier, and adjusting the AGC of the first secondary carrier based on the second temporary reference signal; or
when the carrier aggregation manner of the terminal device is intra-band carrier aggregation, if carriers of the terminal device that participate in aggregation are contiguous carriers, receiving a second temporary reference signal from the first secondary carrier, and adjusting the AGC of the first secondary carrier based on the second temporary reference signal.

9. The method according to claim 7, wherein the determining, based on a carrier aggregation manner of the terminal device, whether to adjust AGC of the first secondary carrier comprises:
when the carrier aggregation manner of the terminal device is intra-band carrier aggregation, if a difference between transmit power of the first secondary carrier and transmit power of an activated carrier of the terminal device is greater than a first threshold, and carriers of the terminal device that participate in aggregation are non-contiguous carriers, receiving an SSB from the first secondary carrier, and adjusting the AGC of the first secondary carrier based on the SSB; or
when the carrier aggregation manner of the terminal device is intra-band carrier aggregation, if carriers of the terminal device that participate in aggregation are non-contiguous carriers, receiving an SSB from the first secondary carrier, and adjusting the AGC of the first secondary carrier based on the SSB.

10. The method according to claim 7, wherein the determining, based on a carrier aggregation manner of the terminal device, whether to adjust AGC of the first secondary carrier comprises:
when the carrier aggregation manner of the terminal device is intra-band carrier aggregation, if a difference between transmit power of the first secondary carrier and transmit power of an activated carrier of the terminal device is greater than a first threshold, and a timing difference between the first secondary carrier and the activated carrier of the terminal device is greater than CP duration, receiving an SSB from the first secondary carrier; and
adjusting the AGC of the first secondary carrier based on the SSB.

11. The method according to claim 7, wherein the determining, based on a carrier aggregation manner of the terminal device, whether to adjust AGC of the first secondary carrier comprises:
when the carrier aggregation manner of the terminal device is inter-band carrier aggregation, receiving an SSB from the first secondary carrier; and
adjusting the AGC of the first secondary carrier based on the SSB.

12. A communication apparatus, comprising a processor and a memory, wherein the memory is configured to store one or more computer programs, and the one or more computer programs comprise computer-executable instructions; and when the communication apparatus runs, the processor executes the one or more computer programs stored in the memory, to enable the communication apparatus to perform the method according to any one of claims 1 to 6.

13. A communication apparatus, comprising a processor and a memory, wherein the memory is configured to store one or more computer programs, and the one or more computer programs comprise computer-executable instructions; and when the communication apparatus runs, the processor executes the one or more computer programs stored in the memory, to enable the communication apparatus to perform the method according to any one of claims 7 to 11.

## Patentansprüche

1. Kommunikationsverfahren, umfassend:
Empfangen (S301) eines Aktivierungsbefehls von einer Netzeinrichtung, wobei der Aktivierungsbefehl angibt, einen ersten sekundären Träger zu aktivieren, und der erste sekundäre Träger einer von sekundären Trägern einer Endgeräteeinrichtung ist;
wenn der erste sekundäre Träger bekannt ist, Bestimmen (S302), basierend auf einem Messzyklus, MC, der Endgeräteeinrichtung für den ersten sekundären Träger, ob eine automatische Verstärkungssteuerung, AGC, des ersten sekundären Trägers anzupassen ist, wobei ein temporäres Referenzsignal dazu verwendet wird, die AGC des ersten sekundären Trägers anzupassen;
Empfangen (S303) eines ersten temporären Referenzsignals von dem ersten sekundären Träger; und
Durchführen (S304) einer Zeit-Frequenz-Synchronisation mit dem ersten sekundären Träger basierend auf dem ersten temporären Referenzsignal,
**dadurch gekennzeichnet, dass**:
das Bestimmen, basierend auf einem Messzyklus der Endgeräteeinrichtung für den ersten sekundären Träger, ob die AGC des ersten sekundären Trägers anzupassen ist, Folgendes umfasst:
Überspringen des Anpassens der AGC des ersten sekundären Trägers, wenn der Messzyklus der Endgeräteeinrichtung für den ersten sekundären Träger kleiner als oder gleich einem ersten Messzyklus ist.

2. Verfahren nach Anspruch 1, wobei eine Aktivierungsdauer des ersten sekundären Trägers basierend auf einer ersten Dauer erlangt wird und die erste Dauer eine Dauer ist, in der die Endgeräteeinrichtung auf einen ersten vollständigen temporären Referenzsignalimpuls von dem ersten sekundären Träger wartet und diesen erlangt.

3. Verfahren nach Anspruch 2, wobei die Aktivierungsdauer des ersten sekundären Trägers die folgende Beziehung erfüllt: ${T}_{activation _ time} = {T}_{first _ TempRS} + 5 ms ,$ wobei
*T_{activation_time}* die Aktivierungsdauer des ersten sekundären Trägers darstellt und *T_{first_TempRS}* die erste Dauer darstellt.

4. Verfahren nach Anspruch 1, wobei das Bestimmen, basierend auf einem Messzyklus der Endgeräteeinrichtung für den ersten sekundären Träger, ob die AGC des ersten sekundären Trägers anzupassen ist, Folgendes umfasst:
Empfangen eines zweiten temporären Referenzsignals von dem ersten sekundären Träger, wenn der Messzyklus der Endgeräteeinrichtung für den ersten sekundären Träger größer als ein erster Messzyklus ist; und
Anpassen der AGC des ersten sekundären Trägers basierend auf dem zweiten temporären Referenzsignal.

5. Verfahren nach Anspruch 4, wobei, wenn eine Trägeraggregationsweise der Endgeräteeinrichtung eine Intraband-Trägeraggregation ist, die Aktivierungsdauer des ersten sekundären Trägers basierend auf einer zweiten Dauer erlangt wird; und
die zweite Dauer eine Dauer ist, in der die Endgeräteeinrichtung auf einen ersten vollständigen temporären Referenzsignalimpuls von dem ersten sekundären Träger wartet und diesen erlangt, oder die zweite Dauer ein größerer Wert in einer dritten Dauer und einer vierten Dauer ist, wobei die dritte Dauer eine Dauer ist, in der die Endgeräteeinrichtung auf einen ersten vollständigen temporären Referenzsignalimpuls von dem ersten sekundären Träger wartet und diesen erlangt, die vierte Dauer eine Dauer ist, in der die Endgeräteeinrichtung auf einen ersten vollständigen Referenzsignalimpuls von einem zweiten Träger wartet und diesen erlangt, und der zweite Träger einen aktivierten Träger der Endgeräteeinrichtung umfasst.

6. Verfahren nach Anspruch 5, wobei, wenn die zweite Dauer die Dauer ist, in der die Endgeräteeinrichtung auf den ersten vollständigen temporären Referenzsignalimpuls von dem ersten sekundären Träger wartet und diesen erlangt, die Aktivierungsdauer des ersten sekundären Trägers die folgende Beziehung erfüllt: ${T}_{activation _ time} = {T}_{first _ TempRS} + {T}_{TempRS} + 5 ms ,$
wobei
*T_{activation_time}* die Aktivierungsdauer des ersten sekundären Trägers darstellt, *T_{first_TempRS}* die zweite Dauer darstellt und *T_{TempRS}* eine Dauer darstellt, in der die Endgeräteeinrichtung auf einen vollständigen temporären Referenzsignalimpuls von dem ersten sekundären Träger wartet und diesen erlangt.

7. Kommunikationsverfahren, umfassend:
Empfangen (S401) eines Aktivierungsbefehls von einer Netzeinrichtung, wobei der Aktivierungsbefehl angibt, einen ersten sekundären Träger zu aktivieren, und der erste sekundäre Träger einer von sekundären Trägern einer Endgeräteeinrichtung ist;
wenn der erste sekundäre Träger unbekannt ist, Bestimmen (S402), basierend auf einer Trägeraggregationsweise der Endgeräteeinrichtung, ob eine AGC des ersten sekundären Trägers anzupassen ist; oder, wenn der erste sekundäre Träger unbekannt ist, Empfangen erster Angabeinformationen von der Netzeinrichtung, wobei die ersten Angabeinformationen angeben, die AGC des ersten sekundären Trägers nicht anzupassen, oder eine Weise zum Anpassen der AGC des ersten sekundären Trägers angeben;
Empfangen (S404) eines ersten temporären Referenzsignals von dem ersten sekundären Träger; und
Durchführen (S405) einer Zeit-Frequenz-Synchronisation mit dem ersten sekundären Träger basierend auf dem ersten temporären Referenzsignal,
**dadurch gekennzeichnet, dass**:
das Bestimmen, basierend auf einer Trägeraggregationsweise der Endgeräteeinrichtung, ob die AGC des ersten sekundären Trägers anzupassen ist, Folgendes umfasst:
wenn die Trägeraggregationsweise der Endgeräteeinrichtung eine Intraband-Trägeraggregation ist, falls eine Differenz zwischen einer Übertragungsleistung des ersten sekundären Trägers und einer Übertragungsleistung eines aktivierten Trägers der Endgeräteeinrichtung kleiner als oder gleich einem ersten Schwellenwert ist, Überspringen des Anpassens der AGC des ersten sekundären Trägers.

8. Verfahren nach Anspruch 7, wobei das Bestimmen, basierend auf einer Trägeraggregationsweise der Endgeräteeinrichtung, ob die AGC des ersten sekundären Trägers anzupassen ist, Folgendes umfasst:
wenn die Trägeraggregationsweise der Endgeräteeinrichtung die Intraband-Trägeraggregation ist, falls eine Differenz zwischen der Übertragungsleistung des ersten sekundären Trägers und der Übertragungsleistung eines aktivierten Trägers der Endgeräteeinrichtung größer als ein erster Schwellenwert ist und Träger der Endgeräteeinrichtung, die an der Aggregation beteiligt sind, angrenzende Träger sind, Empfangen eines zweiten temporären Referenzsignals von dem ersten sekundären Träger und Anpassen der AGC des ersten sekundären Trägers basierend auf dem zweiten temporären Referenzsignal; oder
wenn die Trägeraggregationsweise der Endgeräteeinrichtung die Intraband-Trägeraggregation ist, falls Träger der Endgeräteeinrichtung, die an der Aggregation beteiligt sind, angrenzende Träger sind, Empfangen eines zweiten temporären Referenzsignals von dem ersten sekundären Träger und Anpassen der AGC des ersten sekundären Trägers basierend auf dem zweiten temporären Referenzsignal.

9. Verfahren nach Anspruch 7, wobei das Bestimmen, basierend auf einer Trägeraggregationsweise der Endgeräteeinrichtung, ob die AGC des ersten sekundären Trägers anzupassen ist, Folgendes umfasst:
wenn die Trägeraggregationsweise der Endgeräteeinrichtung die Intraband-Trägeraggregation ist, falls eine Differenz zwischen der Übertragungsleistung des ersten sekundären Trägers und der Übertragungsleistung eines aktivierten Trägers der Endgeräteeinrichtung größer als ein erster Schwellenwert ist und Träger der Endgeräteeinrichtung, die an der Aggregation beteiligt sind, nicht-angrenzende Träger sind, Empfangen eines SSB von dem ersten sekundären Träger und Anpassen der AGC des ersten sekundären Trägers basierend auf dem SSB; oder
wenn die Trägeraggregationsweise der Endgeräteeinrichtung die Intraband-Trägeraggregation ist, falls Träger der Endgeräteeinrichtung, die an der Aggregation beteiligt sind, nicht-angrenzende Träger sind, Empfangen eines SSB von dem ersten sekundären Träger und Anpassen der AGC des ersten sekundären Trägers basierend auf dem SSB.

10. Verfahren nach Anspruch 7, wobei das Bestimmen, basierend auf einer Trägeraggregationsweise der Endgeräteeinrichtung, ob die AGC des ersten sekundären Trägers anzupassen ist, Folgendes umfasst:
wenn die Trägeraggregationsweise der Endgeräteeinrichtung die Intraband-Trägeraggregation ist, falls eine Differenz zwischen der Übertragungsleistung des ersten sekundären Trägers und der Übertragungsleistung eines aktivierten Trägers der Endgeräteeinrichtung größer als ein erster Schwellenwert ist und eine Zeitplanungsdifferenz zwischen dem ersten sekundären Träger und dem aktivierten Träger der Endgeräteeinrichtung größer als eine CP-Dauer ist, Empfangen eines SSB von dem ersten sekundären Träger; und
Anpassen der AGC des ersten sekundären Trägers basierend auf dem SSB.

11. Verfahren nach Anspruch 7, wobei das Bestimmen, basierend auf einer Trägeraggregationsweise der Endgeräteeinrichtung, ob die AGC des ersten sekundären Trägers anzupassen ist, Folgendes umfasst:
wenn die Trägeraggregationsweise der Endgeräteeinrichtung eine Interband-Trägeraggregation ist, Empfangen eines SSB von dem ersten sekundären Träger; und
Anpassen der AGC des ersten sekundären Trägers basierend auf dem SSB.

12. Kommunikationsvorrichtung, umfassend einen Prozessor und einen Speicher, wobei der Speicher dazu konfiguriert ist, ein oder mehrere Computerprogramme zu speichern, und das eine oder die mehreren Computerprogramme computerausführbare Anweisungen umfassen; und, wenn die Kommunikationsvorrichtung läuft, der Prozessor das eine oder die mehreren Computerprogramme, die in dem Speicher gespeichert sind, ausführt, um es der Kommunikationsvorrichtung zu ermöglichen, das Verfahren nach einem der Ansprüche 1 bis 6 durchzuführen.

13. Kommunikationsvorrichtung, umfassend einen Prozessor und einen Speicher, wobei der Speicher dazu konfiguriert ist, ein oder mehrere Computerprogramme zu speichern, und das eine oder die mehreren Computerprogramme computerausführbare Anweisungen umfassen; und, wenn die Kommunikationsvorrichtung läuft, der Prozessor das eine oder die mehreren Computerprogramme, die in dem Speicher gespeichert sind, ausführt, um es der Kommunikationsvorrichtung zu ermöglichen, das Verfahren nach einem der Ansprüche 7 bis 11 durchzuführen.

## Revendications

1. Procédé de communication, comprenant :
la réception (S301) d'une commande d'activation d'un dispositif réseau, dans lequel la commande d'activation indique d'activer une première porteuse secondaire, et la première porteuse secondaire est l'une des porteuses secondaires d'un dispositif terminal ;
lorsque la première porteuse secondaire est connue, le fait de déterminer (S302), sur la base d'un cycle de mesure, MC, du dispositif terminal pour la première porteuse secondaire, s'il faut ajuster le contrôle automatique de gain, AGC, de la première porteuse secondaire, dans lequel un signal de référence temporaire est utilisé pour ajuster l'AGC de la première porteuse secondaire ;
la réception (S303) d'un premier signal de référence temporaire provenant de la première porteuse secondaire ; et
la réalisation (S304) de la synchronisation temps-fréquence avec la première porteuse secondaire sur la base du premier signal de référence temporaire
**caractérisé en ce que** :
le fait de déterminer, sur la base d'un cycle de mesure du dispositif terminal pour la première porteuse secondaire, s'il faut ajuster l'AGC de la première porteuse secondaire comprend :
l'omission du réglage de l'AGC de la première porteuse secondaire lorsque le cycle de mesure du dispositif terminal pour la première porteuse secondaire est inférieur ou égal à un premier cycle de mesure.

2. Procédé selon la revendication 1, dans lequel la durée d'activation de la première porteuse secondaire est obtenue sur la base d'une première durée, et la première durée est la durée pendant laquelle le dispositif terminal attend et obtient une première salve complète de signal de référence temporaire de la première porteuse secondaire.

3. Procédé selon la revendication 2, dans lequel la durée d'activation de la première porteuse secondaire répond à la relation suivante : ${T}_{activation _ time} = {T}_{first _ TempRS} + 5 ms ,$ dans lequel
*T_{activation_time}* représente la durée d'activation de la première porteuse secondaire, et *T_{first_TempRS}* représente la première durée.

4. Procédé selon la revendication 1, dans lequel le fait de déterminer, sur la base d'un cycle de mesure du dispositif terminal pour la première porteuse secondaire, s'il faut ajuster l'AGC de la première porteuse secondaire comprend :
la réception d'un second signal de référence temporaire provenant de la première porteuse secondaire lorsque le cycle de mesure du dispositif terminal pour la première porteuse secondaire est supérieur à un premier cycle de mesure ; et
le réglage de l'AGC de la première porteuse secondaire sur la base du second signal de référence temporaire.

5. Procédé selon la revendication 4, dans lequel, lorsque le mode d'agrégation de porteuses du dispositif terminal est une agrégation de porteuses intra-bande, la durée d'activation de la première porteuse secondaire est obtenue sur la base de la deuxième durée ; et
la deuxième durée correspond à la durée pendant laquelle le dispositif terminal attend et obtient une première salve complète de signal de référence temporaire de la première porteuse secondaire, ou la deuxième durée est supérieure à la troisième et à la quatrième durée, dans lequel la troisième durée correspond à la durée pendant laquelle le dispositif terminal attend et obtient une première salve complète de signal de référence temporaire de la première porteuse secondaire, la quatrième durée correspond à la durée pendant laquelle le dispositif terminal attend et obtient une première salve complète de signal de référence d'une seconde porteuse, et la seconde porteuse comprend une porteuse activée du dispositif terminal.

6. Procédé selon la revendication 5, dans lequel, lorsque la deuxième durée correspond à la durée pendant laquelle le dispositif terminal attend et obtient la première salve complète de signal de référence temporaire de la première porteuse secondaire, la durée d'activation de la première porteuse secondaire satisfait la relation suivante : ${T}_{activation _ time} = {T}_{first _ TempRS} + {T}_{TempRS} + 5 ms ,$ dans lequel
*T_{activation_time}* représente la durée d'activation de la première porteuse secondaire, *T_{first_TempRS}* représente la deuxième durée et *T_{TempRS}* représente la durée pendant laquelle le dispositif terminal attend et obtient une salve complète de signal de référence temporaire de la première porteuse secondaire.

7. Procédé de communication, comprenant :
la réception (S401) d'une commande d'activation d'un dispositif réseau, dans lequel la commande d'activation indique d'activer une première porteuse secondaire, et la première porteuse secondaire est l'une des porteuses secondaires d'un dispositif terminal ;
lorsque la première porteuse secondaire est inconnue, le fait de déterminer (S402), sur la base d'un mode d'agrégation de porteuses du dispositif terminal, s'il faut ajuster l'AGC de la première porteuse secondaire ; ou lorsque la première porteuse secondaire est inconnue, la réception de premières informations d'indication du dispositif réseau, dans lequel les premières informations d'indication indiquent de ne pas ajuster l'AGC de la première porteuse secondaire, ou indiquent un mode d'ajustement de l'AGC de la première porteuse secondaire ;
la réception (S404) d'un premier signal de référence temporaire provenant de la première porteuse secondaire ; et
la réalisation (S405) de la synchronisation temps-fréquence avec la première porteuse secondaire sur la base du premier signal de référence temporaire
**caractérisé en ce que** :
le fait de déterminer, sur la base du mode d'agrégation de porteuses du dispositif terminal, s'il faut ajuster l'AGC de la première porteuse secondaire comprend :
lorsque le mode d'agrégation de porteuses du dispositif terminal est une agrégation de porteuses intra-bande, si la différence entre la puissance d'émission de la première porteuse secondaire et la puissance d'émission d'une porteuse activée du dispositif terminal est inférieure ou égale à un premier seuil, l'omission du réglage de l'AGC de la première porteuse secondaire.

8. Procédé selon la revendication 7, dans lequel le fait de déterminer, sur la base du mode d'agrégation de porteuses du dispositif terminal, s'il faut ajuster l'AGC de la première porteuse secondaire comprend :
lorsque le mode d'agrégation de porteuses du dispositif terminal est l'agrégation de porteuses intra-bande, si la différence entre la puissance d'émission de la première porteuse secondaire et la puissance d'émission d'une porteuse activée du dispositif terminal est supérieure à un premier seuil, et si les porteuses du dispositif terminal participant à l'agrégation sont des porteuses contiguës, la réception d'un second signal de référence temporaire de la première porteuse secondaire et le réglage de l'AGC de la première porteuse secondaire sur la base du second signal de référence temporaire ; ou
lorsque le mode d'agrégation de porteuses du dispositif terminal est l'agrégation de porteuses intra-bande, si les porteuses du dispositif terminal participant à l'agrégation sont des porteuses contiguës, la réception d'un second signal de référence temporaire de la première porteuse secondaire et le réglage de l'AGC de la première porteuse secondaire sur la base du second signal de référence temporaire.

9. Procédé selon la revendication 7, dans lequel le fait de déterminer, sur la base du mode d'agrégation de porteuses du dispositif terminal, s'il faut ajuster l'AGC de la première porteuse secondaire comprend :
lorsque le mode d'agrégation de porteuses du dispositif terminal est l'agrégation de porteuses intra-bande, si la différence entre la puissance d'émission de la première porteuse secondaire et la puissance d'émission d'une porteuse activée du dispositif terminal est supérieure à un premier seuil, et si les porteuses du dispositif terminal participant à l'agrégation sont des porteuses non contiguës, la réception d'un SSB de la première porteuse secondaire et le réglage de l'AGC de la première porteuse secondaire sur la base du SSB ; ou
lorsque le mode d'agrégation de porteuses du dispositif terminal est l'agrégation de porteuses intra-bande, si les porteuses du dispositif terminal participant à l'agrégation sont des porteuses non contiguës, la réception d'un SSB de la première porteuse secondaire et le réglage de l'AGC de la première porteuse secondaire sur la base du SSB.

10. Procédé selon la revendication 7, dans lequel le fait de déterminer, sur la base du mode d'agrégation de porteuses du dispositif terminal, s'il faut ajuster l'AGC de la première porteuse secondaire comprend :
lorsque le mode d'agrégation de porteuses du dispositif terminal est l'agrégation de porteuses intra-bande, si la différence entre la puissance d'émission de la première porteuse secondaire et la puissance d'émission d'une porteuse activée du dispositif terminal est supérieure à un premier seuil, et si la différence de temps entre la première porteuse secondaire et la porteuse activée du dispositif terminal est supérieure à la durée du CP, la réception d'un SSB de la première porteuse secondaire ; et
le réglage de l'AGC de la première porteuse secondaire sur la base du SSB.

11. Procédé selon la revendication 7, dans lequel le fait de déterminer, sur la base du mode d'agrégation de porteuses du dispositif terminal, s'il faut ajuster l'AGC de la première porteuse secondaire comprend :
lorsque le mode d'agrégation de porteuses du dispositif terminal est l'agrégation de porteuses interbandes, la réception d'un SSB provenant de la première porteuse secondaire ; et
le réglage de l'AGC de la première porteuse secondaire sur la base du SSB.

12. Appareil de communication comprenant un processeur et une mémoire, dans lequel la mémoire est configurée pour stocker un ou plusieurs programmes informatiques, et les un ou plusieurs programmes informatiques comprennent des instructions exécutables par ordinateur ; et lorsque l'appareil de communication est en cours d'exécution, le processeur exécute les un ou plusieurs programmes informatiques stockés dans la mémoire, pour permettre à l'appareil de communication de réaliser le procédé selon l'une quelconque des revendications 1 à 6.

13. Appareil de communication comprenant un processeur et une mémoire, dans lequel la mémoire est configurée pour stocker un ou plusieurs programmes informatiques, et les un ou plusieurs programmes informatiques comprennent des instructions exécutables par ordinateur ; et lorsque l'appareil de communication est en cours d'exécution, le processeur exécute les un ou plusieurs programmes informatiques stockés dans la mémoire, pour permettre à l'appareil de communication de réaliser le procédé selon l'une quelconque des revendications 7 à 11.
